# EUROPÄISCHE PATENTSCHRIFT

(11) **EP 1 477 274 B1**
(45) Veröffentlichungstag und Bekanntmachung des Hinweises auf die Patenterteilung: **10.09.2008**
(21) Anmeldenummer: 04011226.0
(22) Anmeldetag: 12.05.2004
(51) Int. Cl.: B23Q 17/24, B23Q 17/22, B23Q 1/00

(54) **Werkzeugmaschine**
Machine tool
Machine-outil

(30) Priorität: 16.05.2003 DE 10323673; 30.05.2003 DE 10325387; 19.07.2003 DE 10332913
(43) Veröffentlichungstag der Anmeldung: 17.11.2004
(73) Patentinhaber: Traub Drehmaschinen GmbH & Co. KG, 73262 Reichenbach (DE)
(72) Erfinder: Baumann, Ulrich, 73252 Lenningen (DE); Klauss, Walter, 73099 Adelberg (DE); Eitel, Manfred, 73669 Lichtenwald (DE); Osswald, Ernst, 73262 Reichenbach (DE); Monz, Joachim, 73066 Uhingen (DE)
(74) Vertreter: Hoeger, Stellrecht & Partner Patentanwälte

(56) Entgegenhaltungen:
- EP-A- 0 985 493
- WO-A-02/28590
- WO-A-03/002298
- DE-A1- 2 941 156
- DE-A1- 10 011 804
- US-A- 4 966 460
- US-B1- 6 301 007

## Beschreibung

Die Erfindung betrifft eine Werkzeugmaschine umfassend ein Maschinengestell, einen Arbeitsraum, in welchem eine Bearbeitung eines Werkstücks mittels eines Werkzeugs durch Bewegung derselben relativ zueinander erfolgt, einen am Maschinengestell angeordneten Werkstückträger mit einer Aufnahme für das Werkstück, einen am Maschinengestell angeordneten Werkzeugträger mit einer Aufnahme für das Werkzeug, eine Maschinensteuerung zur Durchführung der Bewegung von Werkstück und Werkzeug relativ zueinander und eine optische Messeinrichtung zum Erfassen von Geometriedaten von mindestens einem Im Arbeitsraum angeordneten Objekt in einer innerhalb eines Erfassungsraums liegenden Erfassungsebene relativ zu einem Maschinenbezugspunkt, wobei die Messeinrichtung eine elektronische Bilderfassungseinheit und eine dieser zugeordnete Abbildungsoptik aufweist, die ein innerhalb des Erfassungsraums angeordnetes Objekt auf die Bilderfassungseinheit abbildet und eine der Bilderfassungseinheit zugeordnete Bildverarbeitungseinheit, mit welcher aufgrund von Geometriedaten des Objekts und Referenzdaten eine Relativposition des Objekts zu dem Maschinenbezugspunkt bestimmbar ist.

Eine derartige Werkzeugmaschine ist aus der EP 0 985 493 A2 bekannt.

Bei dieser erfolgt ein Erfassen der Geometriedaten von mindestens einem im Arbeitsraum angeordneten Werkzeug durch eine Messeinrichtung mit einer Bilderfassungseinheit.

Ein derartiges Vermessen eines Werkzeugs kann zu Ungenauigkeiten führen.

Der Erfindung liegt daher die Aufgabe zugrunde, bei einer Werkzeugmaschine der eingangs beschriebenen Art ein Vermessen eines Objekts im Arbeitsraum optimaler durchführen zu können.

Diese Aufgabe wird bei einer Werkzeugmaschine der eingangs beschriebenen Art erfindungsgemäß dadurch gelöst, dass die Abbildungsoptik in einem sich in der Messstellung in dem Arbeitsraum erstreckenden Gehäuse angeordnet ist und dass eine Positioniereinrichtung vorgesehen ist, mit welcher das Gehäuse mitsamt der Abbildungsoptik in der Messstellung an einer Halterung der Werkzeugmaschine durch einen lösbaren Formschluss im Arbeitsraum exakt positionierbar ist.

Der Vorteil der erfindungsgemäßen Lösung ist darin zu sehen, dass mit dieser in besonders effizienter Weise und mit großer Präzision die Vermessung eines Objekts im Arbeitsraum durchführbar ist.

Insbesondere sind durch eine derartige exakte Positionierung der Abbildungsoptik im Arbeitsraum auch der Erfassungsraum und die Erfassungsebene exakt festlegbar, so dass daraus auch eine hohe Messgenauigkeit mit exakten Messergebnissen resultiert.

Um die Abbildungsoptik im Arbeitsraum anordnen zu können, ist vorgesehen, dass die Abbildungsoptik in einem sich in einer Messstellung in den Arbeitsraum erstreckenden Gehäuse angeordnet ist.

Vorzugsweise ist die Messeinrichtung so ausgebildet, dass sie in einer Messstellung die Relativposition des Objekts zum Maschinenbezugspunkt ermittelt.

Es ist aber auch möglich, mehrere Messstellungen vorzusehen.

In einer derartigen Messstellung der Messeinrichtung ist es erforderlich, die Position des Erfassungsbereichs und der Erfassungsebene sowie der durch die Referenzdaten repräsentierten Orte innerhalb derselben relativ zum Maschinenbezugspunkt exakt zu kennen, um zuverlässige Messungen durchzuführen.

Dies setzt nicht zwingend voraus, dass nur eine Messstellung vorgesehen ist. Im Rahmen der erfindungsgemäßen Lösung besteht auch die Möglichkeit, mindestens zwei oder mehrere Messstellungen vorzusehen.

Dabei besteht die Möglichkeit, die Abbildungsoptik und deren Gehäuse beispielsweise so zu bewegen, dass damit auch der Erfassungsraum mit der Erfassungsebene in diese verschiedenen Messstellungen bringbar ist.

Es ist aber auch denkbar, dass der Erfassungsraum und die Erfassungsebene durch eine Folge von Messstellungen hindurchbewegt werden.

In einem derartigen Fall ist vorzugsweise vorgesehen, dass der Erfassungsraum und die Erfassungsebene entsprechend einer definierten Folge in die verschiedenen Messstellungen bewegt wird.

Im Extremfall ist es sogar denkbar, dass eine Reihe von Messstellungen kontinuierlich durchlaufen wird.

In diesem Fall ist es erforderlich, in jeder der Messstellungen die Position des Erfassungsraums und der Erfassungsebene relativ zu dem Maschinenbezugspunkt exakt zu kennen oder zu erfassen. Hierzu ist es besonders vorteilhaft, wenn der Messeinrichtung eine Positionserkennungseinrichtung zugeordnet ist.

Eine derartige Positionserkennungseinrichtung kann im einfachsten Fall durch Anschlagmittel gebildet sein.

Besonders günstig ist es jedoch, wenn eine derartige Positionserkennungseinrichtung für die Messeinrichtung kontinuierlich arbeitet und kontinuierlich beispielsweise Ortswechsel der Abbildungsoptik zu erfassen in der Lage ist.

Das Gehäuse könnte an jeder beliebigen Stelle des Arbeitsraums angeordnet sein. Besonders günstig ist es, wenn sich das Gehäuse in der Messstellung ausgehend von einem den Arbeitsraum begrenzenden Element in diesen hinein erstreckt, beispielsweise in Form eines langgestreckten Arms.

Hinsichtlich der Ausbildung des Gehäuses sind die unterschiedlichsten Möglichkeiten denkbar. Eine Möglichkeit sieht vor, dass das Gehäuse zusätzlich zu der Abbildungsoptik die elektronische Bilderfassungseinheit aufnimmt und somit sowohl die Abbildungsoptik als auch die elektronische Bilderfassungseinheit zu einer in der Messstellung im Arbeitsraum zu positionierenden Einheit kombiniert.

Eine andere vorteilhafte Lösung sieht vor, dass die elektronische Bilderfassungseinheit in einem eigenen, von dem Gehäuse der Abbildungsoptik separaten Gehäuse angeordnet ist.

Damit besteht insbesondere die Möglichkeit, die elektronische Bilderfassungseinheit von dem Gehäuse der Abbildungsoptik lösbar auszubilden, so dass beispielsweise die elektronische Bilderfassungseinheit an einer Komponente der Werkzeugmaschine ständig angeordnet sein kann, während das Gehäuse mit der Abbildungsoptik von der Bilderfassungseinheit lösbar ist.

Eine besonders günstige Lösung sieht dabei vor, dass das Gehäuse der Abbildungsoptik von der Messstellung in eine Ruhestellung und umgekehrt bewegbar ist. Dabei kann das Gehäuse der Abbildungsoptik entweder manuell oder durch eine Vorrichtung, beispielsweise auch durch eine Art Greifeinrichtung, von der Messstellung in die Ruhestellung und umgekehrt bewegt werden.

Für den Fall eines Ausführungsbeispiels, bei welchem mehrere Messstellungen vorgesehen sind, ist vorteilhafterweise das Gehäuse mit der Abbildungsoptik in die mehreren Messstellungen bewegbar, um in jeder der Messstellungen die Position des Objekts erfassen zu können, wobei die Position des Objekts nur bei exakt bekannter Position der Messstellung erfassbar ist.

Eine derartige Position der Messstellung könnte entweder durch Anschlagmittel oder eine Positionserfassung präzise im Raum ermittelt werden.

Bei all diesen Lösungen ließe sich die Bewegbarkeit des Gehäuses der Abbildungsoptik dazu ausnutzen, die mehrere Messstellungen anzufahren.

Es ist im Rahmen der erfindungsgemäßen Lösung aber auch denkbar, eine tatsächliche Messung nur in einer Messstellung vorzunehmen, die Bewegung des Gehäuses der Abbildungsoptik aber auch dazu auszunützen, um Übersichtsbilder über Teilbereiche des Arbeitsraums zu erzeugen. Dabei ist es im einfachsten Fall nicht zwingend nötig, exakt die Position der Messeinrichtung bei der Erfassung des Bereichs des Arbeitsraums zu kennen. Es reicht eine Grobermittlung der Position der Messeinrichtung, um Übersichtsbilder über einen entsprechenden Bereich des Arbeitsraums aufnehmen zu können.

Dabei ist es prinzipiell denkbar, die Ruhestellung im Arbeitsraum vorzusehen.

Zum Schutz des Gehäuses der Abbildungsoptik und insbesondere der in dem Gehäuse enthaltenen Abbildungsoptik ist es besonders günstig, wenn das Gehäuse der Abbildungsoptik aus dem Arbeitsraum heraus in die Ruhestellung bewegbar ist.

Insbesondere ist es dabei wesentlich, dass das Gehäuse der Abbildungsoptik in der Ruhestellung gegen Spänebeaufschlagung und/oder Kühlmittelbeaufschlagung geschützt ist.

Hinsichtlich der Bewegung des Gehäuses, insbesondere im Arbeitsraum, beispielsweise von der Messstellung in die Ruhestellung und umgekehrt, ist es besonders günstig, wenn das Gehäuse mittels eines Antriebs bewegbar ist.

Vorzugsweise ist dabei vorgesehen, dass das Gehäuse durch den Antrieb in den Arbeitsraum hinein und aus diesem heraus bewegbar ist.

Um ein Werkzeug besonders günstig vermessen zu können, ist vorzugsweise vorgesehen, dass das Gehäuse in Richtung quer zu einer Bewegungsachse des Werkzeugs bei der Bearbeitung des Werkstücks bewegbar ist.

Insbesondere in all den Fällen, in denen die Bilderfassungseinheit nicht mit dem Gehäuse der Abbildungsoptik aus dem Arbeitsraum entfernbar ist, ist vorzugsweise vorgesehen, daß das Gehäuse der Bilderfassungseinheit durch die Positioniereinrichtung exakt relativ zum Gehäuse der Abbildungsoptik positionierbar ist, das heißt daß gleichzeitig mit der exakten Positionierung des Gehäuses der Abbildungsoptik relativ zur Werkzeugmaschine auch eine exakte Positionierung der Abbildungsoptik relativ zur Bilderfassungseinheit erfolgt.

Eine weitere vorteilhafte Ausführungsform sieht vor, daß der Positioniereinrichtung eine Führung für eine Bewegung des Gehäuses in den Arbeitsraum hinein und aus diesem heraus zugeordnet ist.

Mit einer derartigen Führung besteht die Möglichkeit, die Gesamtheit aus Bilderfassungseinheit und Abbildungsoptik in der Werkzeugmaschine aus dem Arbeitsraum heraus oder in diesen hinein zu bewegen, insbesondere zwischen der Meßstellung und der Ruhestellung.

Grundsätzlich wäre es denkbar, die gesamte Meßeinrichtung mitsamt der elektronischen Bilderfassungseinheit in dem Arbeitsraum anzuordnen. Da die elektronische Bilderfassungseinheit jedoch eine Vielzahl von elektrischen Anschlüssen benötigt, und außerdem empfindlich ist gegen die Einwirkung von Kühl- oder Schmiermittel im Arbeitsraum und/oder Spänen, würde die Anordnung der elektronischen Bilderfassungseinheit im Arbeitsraum einen hohen Aufwand für die Abschirmung und Kapselung derselben gegen die schädlichen Einflüsse im Arbeitsraum erfordern.

Aus diesem Grund sieht ein besonders günstiges Ausführungsbeispiel vor, daß in der Meßstellung des Gehäuses der Abbildungsoptik die elektronische Bilderfassungseinheit für die Abbildungsoptik außerhalb des Arbeitsraums angeordnet ist.

Dies gilt sowohl für den Fall, daß die elektronische Bilderfassungseinheit in das Gehäuse für die Abbildungsoptik integriert ist als auch für den Fall, daß die elektronische Bilderfassungseinheit ein separates Gehäuse aufweist, welches von dem Gehäuse für die Abbildungsoptik lösbar und wieder verbindbar ist, um das Gehäuse für die Abbildungsoptik mitsamt derselben aus dem Arbeitsraum zu entfernen.

Im Zusammenhang mit der bisherigen Beschreibung der Funktion der erfindungsgemäßen Meßeinrichtung wurde nicht näher darauf eingegangen, welche Geometriedaten von der Meßeinrichtung erfaßt werden.

Besonders günstig ist es, wenn die Meßeinrichtung eine Außenkontur des Objekts erfaßt, da diese einfach und mit der notwendigen Präzision abbildbar ist.

Ferner wurde auch die Arbeitsweise der Abbildungsoptik bei der erfindungsgemäßen Meßeinrichtung nicht näher präzisiert.

So sieht ein besonders günstiges Ausführungsbeispiel vor, daß die Abbildungsoptik in einer festgelegte Erfassungsebene liegende geometrische Konturen des Objekts auf die Bilderfassungseinheit abbildet.

Im einfachsten Fall ist damit die Abbildungsoptik auf eine einzige festgelegte Erfassungsebene hinsichtlich der Abbildungseigenschaften eingestellt.

Es ist aber auch denkbar, die Abbildungsoptik so aufzubauen, daß sie in der Lage ist, durch unterschiedliche Einstellung geometrische Konturen in mehreren, vorzugsweise zueinander parallel liegenden und in Beobachtungsrichtung einen unterschiedlichen Abstand aufweisenden Erfassungsebenen jeweils auf die Bilderfassungseinheit abzubilden.

Besonders vorteilhaft ist es, wenn die Meßeinrichtung durch von einer der Erfassungsebene gegenüberliegenden Seite kommendes diffuses Hintergrundlicht sich in der Erfassungsebene abzeichnende Konturen erfaßt, deren derartige Schattenkonturen sind aufgrund deren Schärfe vorteilhaft für eine Messung einzusetzen.

Das diffuse Hintergrundlicht ist vorzugsweise dadurch erhältlich, daß es durch eine auf einer der Abbildungsoptik gegenüberliegenden Seite der Erfassungsebene angeordnete Strahlungsquelle erzeugt wird.

Eine andere Möglichkeit sieht vor, daß das diffuse Hintergrundlicht durch Reflexion von Licht erzeugt wird, das von einer Strahlungsquelle kommt, die auf der selben Seite der Erfassungsebene angeordnet ist wie die Abbildungsoptik.

Besonders günstig ist es, wenn hierbei die Strahlungsquelle an dem Gehäuse der Abbildungsoptik angeordnet ist.

Darüber hinaus besteht vielfach die Notwendigkeit, ein Werkzeug in mehreren nichtparallelen Erfassungsebenen zu vermessen, beispielsweise in der X/Z-Ebene und der X/Y-Ebene einer Werkzeugmaschine.

Dies ist vorzugsweise bei einer Ausführungsform der erfindungsgemäßen Lösung möglich, bei welcher die Abbildungsoptik derart ausgebildet ist, daß die Erfassung von Geometriedaten in zwei von einander verschiedenen, nichtparallelen Erfassungsebenen möglich ist.

Eine derartige Erfassung in zwei verschiedenen Erfassungsebenen ist nur mit großem Aufwand gleichzeitig durchführbar und auch nicht gleichzeitig auswertbar, aus diesem Grund ist vorzugsweise vorgesehen, daß die Abbildungsoptik von einer Erfassungsebene auf die andere Erfassungsebene umschaltbar ist, so daß nacheinander eine Vermessung beispielsweise ein und desselben Werkzeugs in der einen Erfassungsebene und in der anderen Erfassungsebene möglich ist.

Im Rahmen dieser Lösung ist es aber auch genauso denkbar, unterschiedliche Werkzeuge, je nach der Art ihres Einsatzes und ihres Bearbeitungsaufgabe in unterschiedlichen Erfassungsebenen zu vermessen. Beispielsweise ist es mit dieser Lösung möglich, bestimmte Arten von Werkzeugen nur in einer Erfassungsebene zu vermessen, andere Arten von Werkzeugen in der anderen Erfassungsebene und/oder weitere Arten von Werkzeugen beispielsweise in beiden Erfassungsebenen.

Eine besonders vorteilhafte Lösung sieht vor, daß die Abbildungsoptik derart ausgebildet ist, daß mindestens eine Erfassungsebene parallel zu mindestens einer der Bewegungsachsen verläuft, längs welcher eine Relativbewegung zwischen dem Werkstück und dem Werkzeug zur Bearbeitung des Werkstücks erfolgt.

Insbesondere bei all den Ausführungsbeispielen, bei welchen das Werkstück vorzugsweise zur Durchführung zumindest eines Teils der Bearbeitung um eine Spindelachse drehbar ist, ist vorzugsweise vorgesehen, daß die eine Erfassungsebene parallel zur Spindelachse verläuft.

Alternativ oder ergänzend dazu ist bei einer weiteren Ausführungsform vorgesehen, daß eine Erfassungsebene quer zur Spindelachse verläuft.

Bei den bislang beschriebenen Ausführungsbeispielen wurde davon ausgegangen, daß mit der Meßeinrichtung in der Meßstellung eine Erfassung von Geometriedaten erfolgt. Es wurde nichts über den Einsatz der Meßeinrichtung in allen Stellungen außerhalb der Meßstellungen gesagt.

Im Rahmen der erfindungsgemäßen Lösung ist es alternativ oder ergänzend dazu denkbar, mit der Meßeinrichtung während einer Bewegung derselben im Arbeitsraum Geometriedaten zu erfassen. Dies kann eine Bewegung ohne exakte Festlegung der Position der Meßeinrichtung sein, und somit lediglich eine zumindest nicht auf hohe Präzision ausgelegte Erfassung von Geometriedaten. Es ist aber auch denkbar, die Position der Meßeinrichtung während der Bewegung exakt zu erfassen und aufgrund dieser Erfassung der Position der Meßeinrichtung exakte Messungen vorzunehmen.

Das exakte Erfassen der relativen Position der Meßeinrichtung relativ zu einem die Geometriedaten aufweisenden Objekt im Arbeitsraum kann in unterschiedlichster Weise erfolgen.

Beispielsweise kann hierzu ein Meßsystem vorgesehen sein, mit welchem die Bewegung der Meßeinrichtung im Arbeitsraum erfassbar ist.

Alternativ dazu läßt sich aber auch die Relativbewegung der Meßeinrichtung zum Objekt im Arbeitsraum dadurch erfassen, daß eine Erfassung der relativen Bewegung der Meßeinrichtung zum Objekt im Arbeitsraum durch eine gesteuerte Bewegung einer die Meßeinrichtung oder das Objekt tragenden Einheit der Werkzeugmaschine zu dem zu erfassenden Objekt bzw. der Meßeinrichtung erfolgt, denn in diesem Fall ist durch die Erfassung der Bewegung der Einheit der Werkzeugmaschine gleichzeitig unmittelbar eine exakte Erfassung der Position der Meßeinrichtung bzw. des Objekts im Arbeitsraum möglich, wenn die Meßeinrichtung bzw. das Objekt zu dieser Einheit der Werkzeugmaschine in einer definierten Anordnung steht.

Beispielsweise wäre es denkbar, im Rahmen der erfindungsgemäßen Lösung die Meßeinrichtung in eine Meßstellung relativ zu der Einheit der Werkzeugmaschine zu fahren, an welcher die Meßeinrichtung gehalten ist und dann die Einheit der Werkzeugmaschine mitsamt der Meßeinrichtung zu verfahren und dadurch die Meßeinrichtung im Arbeitsraum gesteuert zu bewegen.

Eine besonders zweckmäßige Lösung sieht bei einer Gegenspindelmaschine vor, eine Meßeinrichtung an einem bewegbaren Spindelgehäuse der Gegenspindel anzuordnen und die Meßeinrichtung dann mitsamt der Gegenspindel im Arbeitsraum zu bewegen, um beispielsweise Werkstücke in der Hauptspindel oder Werkzeuge in den Werkzeugträgern der Hauptspindel und/oder der Gegenspindel zu vermessen.

Alternativ dazu besteht auch die Möglichkeit, die Relativbewegung zwischen dem zu erfassenden Objekt und der Meßeinrichtung umzukehren, nämlich dadurch, daß die Meßeinrichtung fest mit einer unbeweglichen Einheit, beispielsweise dem Spindelgehäuse der Hauptspindel, verbunden ist und das in der Gegenspindel aufgenommene Werkstück relativ zu der Meßeinrichtung bewegt wird.

Um für einen Bediener das Auffinden des Erfassungsraums, in welchem die Meßeinrichtung Messungen vornehmen kann, zu erleichtern, ist bei einer bevorzugten Ausführungsform vorgesehen, daß eine den Erfassungsraum durch ein Strahlenbündel im sichtbaren Bereich optisch kennzeichnende Markierungslichtquelle vorgesehen ist.

Die Markierungslichtquelle kann prinzipiell überall im Arbeitsraum oder an der Maschine angeordnet sein. Eine besonders günstige Lösung sieht vor, daß die Markierungslichtquelle an dem Gehäuse der Abbildungsoptik angeordnet ist.

In diesem Fall ist die relative Position der Markierungslichtquelle zur Abbildungsoptik festgelegt und somit erfolgt mit der Positionierung der Abbildungsoptik in der Meßstellung gleichzeitig eine entsprechende Positionierung der Markierungslichtquelle.

Im Zusammenhang mit der bisherigen Beschreibung der erfindungsgemäßen Lösung wurde nicht näher darauf eingegangen, mit welchen Mitteln eine Relativposition der Geometriedaten des Objekts zu Referenzdaten erfolgen soll.

So sieht ein vorteilhaftes Ausführungsbeispiel vor, daß der Bildverarbeitungseinheit ein das Objekt darstellender Bildschirm zugeordnet ist, mit welchem es möglich ist, das Objekt und auch die Referenzdaten optisch darzustellen.

Hinsichtlich der Referenzdaten wurden bislang auch keine näheren Angaben gemacht. So könnten die Referenzdaten beispielsweise durch ein in der Abbildungsoptik integriertes Fadenkreuz repräsentiert sein, das dann zwangsläufig ebenfalls von der Bilderfassungseinheit mitsamt der Abbildung der geometrischen Kontur des Objekts erfaßt wird.

Eine besonders zweckmäßige Lösung sieht jedoch vor, daß die Referenzdaten durch einen Referenzdatensatz gebildet sind, welcher in der Bildverarbeitungseinheit gespeichert ist, und somit in einfacher Weise zu einer automatischen Bestimmung der Relativposition der Geometriedaten des Objekts zu den Referenzdaten herangezogen werden kann.

Besonders günstig ist es, wenn die Referenzdaten mindestens einer Referenzlinie entsprechen.

Vorzugsweise sind die Referenzdaten so ausgebildet, daß sie zwei sich kreuzenden Referenzlinien entsprechen.

Die Referenzlinien können dabei beispielsweise auch gekrümmte Linien sein. Eine aufgrund ihrer Einfachheit besonders zweckmäßige Lösung sieht vor, daß die Referenzdaten ein Fadenkreuz darstellen.

Prinzipiell wäre es denkbar, auch mit der erfindungsgemäßen Lösung durch Vergleich der Geometriedaten des Objekts mit den Referenzdaten, beispielsweise beide dargestellt auf dem Bildschirm der Bildverarbeitungseinheit, seitens der Bedienungsperson das Berühren der Referenzdaten durch die Geometriedaten des Objekts feststellen zu lassen.

Um die Berührung zwischen den Geometriedaten des Objekts und den Referenzdaten möglichst präzise und möglichst selbsttätig erfassen zu können, ist vorzugsweise vorgesehen, daß die Bildverarbeitungseinheit ein Bildverarbeitungsprogramm aufweist, welches ein Berühren von durch die Referenzdaten bestimmten Orten durch die Geometriedaten des Objekts entsprechenden Orten erkennt.

Besonders günstig ist es dabei, wenn das Bildverarbeitungsprogramm in der Lage ist, ein Berühren der durch die Referenzdaten bestimmten Orte von einem Übergreifen der durch die Referenzdaten bestimmten Orte zu unterscheiden.

Um bei einem automatischen Erkennen der Relativpositionen der Geometriedaten des Objekts zu den Referenzdaten auch zu erreichen, daß das Objekt automatisch gesteuert so lange verfahren wird, bis die Geometriedaten die Referenzdaten berühren, ist vorzugsweise vorgesehen, daß die Bildverarbeitungseinheit über eine Vermessungssteuerung auf die Maschinensteuerung in dem Sinne einwirkt, daß das Objekt in sich zunehmend verkleinerndem Abstand an die Referenzdaten heranbewegbar ist.

Bei einem weiteren vorteilhaften Ausführungsbeispiel ist vorgesehen, daß der Bildverarbeitungseinheit eine Kamera zugeordnet ist, in deren Beobachtungsbereich in Arbeitsstellung zum Werkstück ausgerichtete Werkzeuge stehen. Mit einer derartigen Kamera läßt sich damit zumindest eine grobe Erkennung der Position der in Arbeitsstellung zum Werkstück ausgerichteten Werkzeuge ermitteln.

Darüber hinaus läßt sich aber auch mit einer derartigen Kamera beispielsweise die Durchführung eines Bearbeitungsprozesses des Werkstücks ermitteln.

Die Kamera könnte prinzipiell an beliebigen Stellen im Arbeitsraum angeordnet sein, so lange sichergestellt ist, daß die in Arbeitsstellung zum Werkstück ausgerichteten Werkzeuge erfaßt werden können.

Besonders günstig ist es, wenn die Kamera auf einer der Meßeinrichtung gegenüberliegenden Seite des in der Werkstückaufnahme zur Bearbeitung vorgesehenen Werkstücks angeordnet ist.

In diesem Fall ist es besonders vorteilhaft, daß ohne eine Überlappen des Beobachtungsbereichs der Kamera und des Erfassungsbereichs der Meßeinrichtung gearbeitet werden kann.

Es ist aber auch beim Einsetzen einer Kamera denkbar, diese beispielsweise unmittelbar an der Meßeinrichtung anzuordnen und somit mit einem sich mit dem Erfassungsbereich überlappenden Beobachtungsbereich zu arbeiten, wobei der Beobachtungsbereich in diesem Fall üblicherweise weit größer als der Erfassungsbereich ist.

Der Beobachtungsbereich der Kamera ist dabei üblicherweise ein Teilbereich des Arbeitsraums.

Besonders günstig ist es dabei, wenn der Beobachtungsbereich der Kamera eine Ausdehnung aufweist, so daß alle einem zu bearbeitenden Werkstück zugeordneten und in Arbeitsstellung stehenden Werkzeug von der Kamera erfassbar sind. Diese Lösung hat den Vorteil, daß somit mit der Kamera die Möglichkeit besteht, alle in Arbeitsstellung stehenden Werkzeuge unabhängig von der Position des Werkzeugträgers zu erfassen und zu erkennen und dann ausgehend von dieser Erkennung der Stellungen der Werkzeuge diese in den Erfassungsraum zu bewegen.

Eine weitere vorteilhafte Lösung sieht vor, daß mit der Bildverarbeitungseinheit und der Kamera ein Bearbeitungsprozeß des Werkstücks aufzeichenbar ist.

Eine derartige Aufzeichnung des Bearbeitungsprozesses kann dabei einfach über einen längeren Zeitraum erfolgen, innerhalb von welchem der Bearbeitungsprozeß auf jeden Fall auftritt.

Eine andere vorteilhafte Lösungsmöglichkeit sieht vor, daß die Maschinensteuerung ein Startsignal und ein Stoppsignal liefert, durch welche für die Bildverarbeitungseinheit erkennbar ist, wann der Bearbeitungsprozeß beginnt und wann er endet, um die Bilderfassung im wesentlichen auf die Zeitdauer zwischen Beginn und Ende des Bearbeitungsprozesses zu konzentrieren und keine unnötig großen Datenmengen anfallen zu lassen.

Weitere Merkmale und Vorteile der Erfindung sind Gegenstand der nachfolgenden Beschreibung sowie der zeichnerischen Darstellung einer Ausführungsbeispiele.

In der Zeichnung zeigen:
- Figur 1: eine perspektivische Ansicht eines ersten Ausführungsbeispiels einer erfindungsgemäßen Werkzeugmaschine;
- Figur 2: eine Ansicht des ersten Ausführungsbeispiels in Richtung des Pfeils 1 in Figur 1;
- Figur 3: ein Schnitt längs Linie B-B in Figur 2 durch das erfindungsgemäße Meßsystem unter Weglassung des Werkzeugträgers in Figur 1;
- Figur 4: eine Schnittdarstellung entsprechend Figur 3 bei aus dem Arbeitsraum entnommenem Gehäuse der Abbildungsoptik;
- Figur 5: eine vergrößerte Darstellung des Schnitts durch das Meßsystem gemäß Figur 3;
- Figur 6: eine vergrößerte Darstellung der auf einem Bildschirm einer Bildverarbeitungseinheit erkennbaren Geometriedaten relativ zu Referenzdaten;
- Figur 7: eine schematische Darstellung der verschiedenen, durch das erste Ausführungsbeispiel möglichen Messungen;
- Figur 8: ein Schnitt ähnlich Figur 5 durch eine erfindungsgemäße Meßeinrichtung eines zweiten Ausführungsbeispiels einer erfindungsgemäßen Werkzeugmaschine;

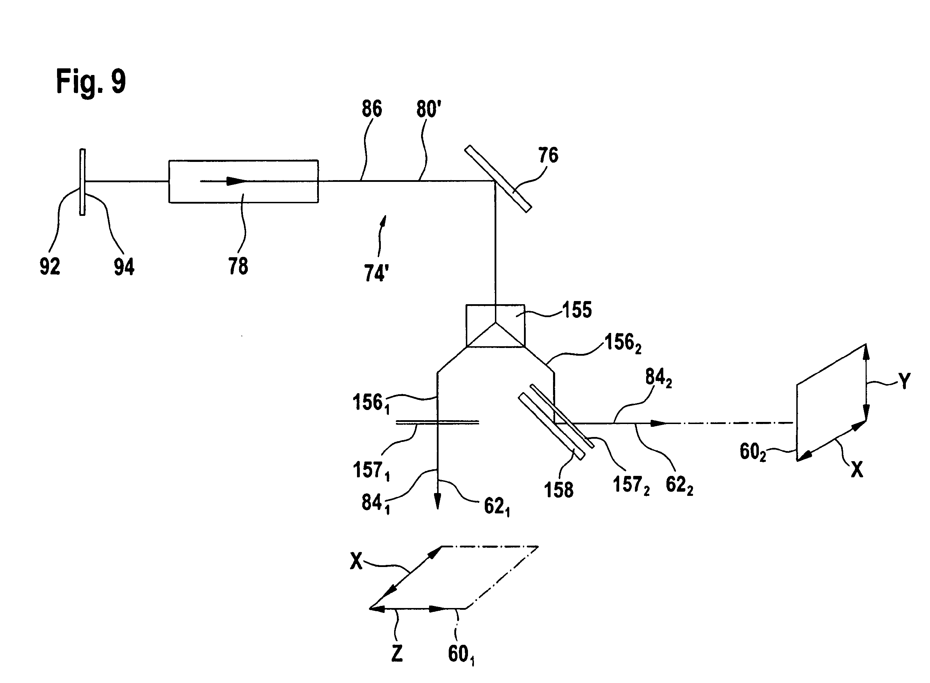

- Figur 9: eine schematische Darstellung einer Abbildungsoptik eines erfindungsgemäßen Meßsystems eines dritten Ausführungsbeispiels einer erfindungsgemäßen Werkzeugmaschine;
- Figur 10: eine Darstellung auf einer Werkzeugmaschine gemäß einem vierten Ausführungsbeispiel einer erfindungsgemäßen Werkzeugmaschine;
- Figur 11: eine schematische Darstellung der verschiedenen Einsatzmöglichkeiten gemäß dem vierten Ausführungsbeispiel;
- Figur 12: eine perspektivische Draufsicht auf eine Werkzeugmaschine gemäß einem fünften Ausführungsbeispiel einer erfindungsgemäßen Werkzeugmaschine;

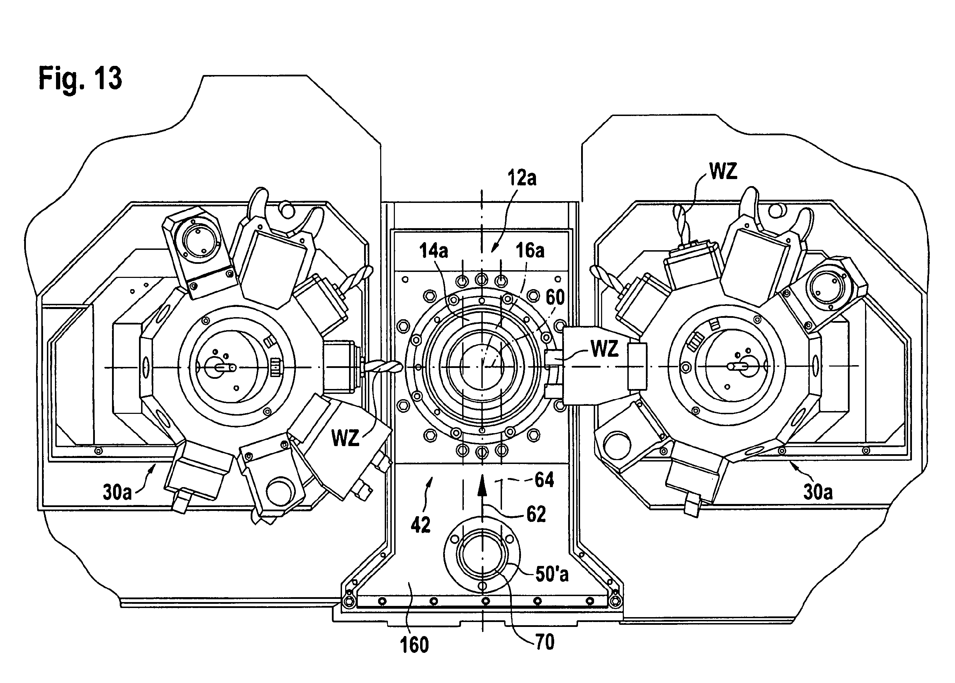

- Figur 13: eine Ansicht des fünften Ausführungsbeispiels mit Blick in Richtung des Pfeils C in Figur 12;
- Figur 14: einen Schnitt durch das Meßsystem des fünften Ausführungsbeispiels längs Linie D-D in Figur 13 bei in Meßstellung stehender Meßeinrichtung;
- Figur 15: einen Schnitt ähnlich Figur 14 bei in Ruhestellung stehender Meßeinrichtung;
- Figur 16: eine vergrößerte Darstellung des Schnitts gemäß Figur 14 durch das Meßsystem des fünften Ausführungsbeispiels und
- Figur 17: eine Ansicht eines sechsten Ausführungsbeispiels entsprechend Figur 13.

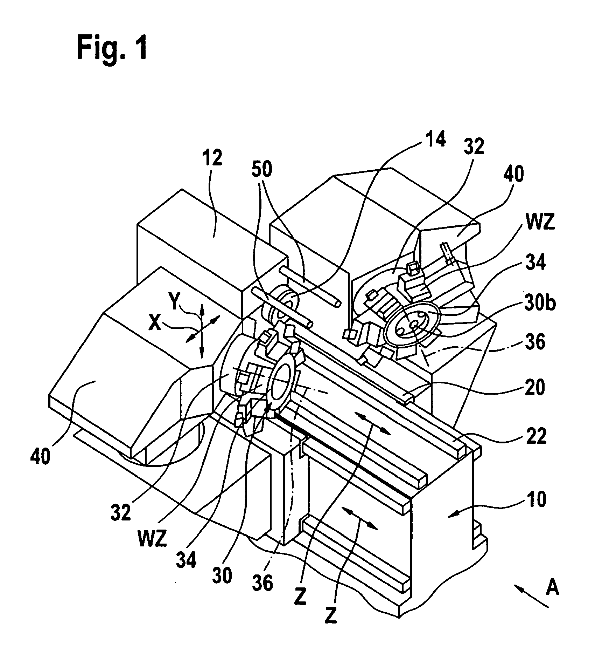

Ein erstes Ausführungsbeispiel einer erfindungsgemäßen Werkzeugmaschine, beispielsweise ausgebildet als Drehmaschine, dargestellt in Fig. 1, umfaßt ein als Ganzes mit 10 bezeichnetes Maschinengestell, an welchem ein Spindelgehäuse 12 angeordnet ist, in dem eine Werkstückspindel 14 drehbar gelagert ist, die ihrerseits um eine Spindelachse 16 relativ zum Spindelgehäuse 12 drehbar ist und eine Werkstückaufnahme 18, beispielsweise in Form eines Spannfutters aufweist, durch welche ein Werkstück W in der Werkstückspindel 14 aufnehmbar und fixierbar ist.

Das Spindelgehäuse 12 ist dabei entweder relativ zum Maschinengestell 10 stationär angeordnet oder auf einem Schlitten 20 angeordnet, welcher durch Längsführungen 22 am Maschinengestell 10 in einer parallel zur Spindelachse 16 verlaufenden Z-Richtung verschiebbar geführt ist.

Darüber hinaus sind an dem Maschinengestell 10 beispielsweise auf einander gegenüberliegenden Seiten der Spindelachse 16, Werkzeugträger 30 vorgesehen, welche beispielsweise als Werkzeugrevolver ausgebildet sind und jeweils ein Revolvergehäuse 32 aufweisen, gegenüber welchem ein Revolverkopf 34 um eine Revolverachse 36 drehbar ist.

Jeder dieser Revolverköpfe 34 trägt nun eine Vielzahl von Werkzeugen WZ bzw. WZ, mit welchen das Werkstück W bearbeitet werden kann.

Jeder der Werkzeugrevolver 30 ist beispielsweise durch ein Schlittensystem 40 gegenüber dem Maschinengestell 10 zumindest in der Z-Richtung parallel zur Spindelachse 16 als auch in einer X-Richtung, das heißt quer zur Spindelachse 16 auf diese zu bewegbar, vorzugsweise noch in einer Y-Richtung, welche quer zur Z- und zur X-Richtung verläuft.

Die Bearbeitung des Werkstücks W erfolgt dabei in einem Arbeitsraum 42, in welchen das Werkstück W hineinragt und in welchem auch die Werkzeuge WZ angeordnet sind.

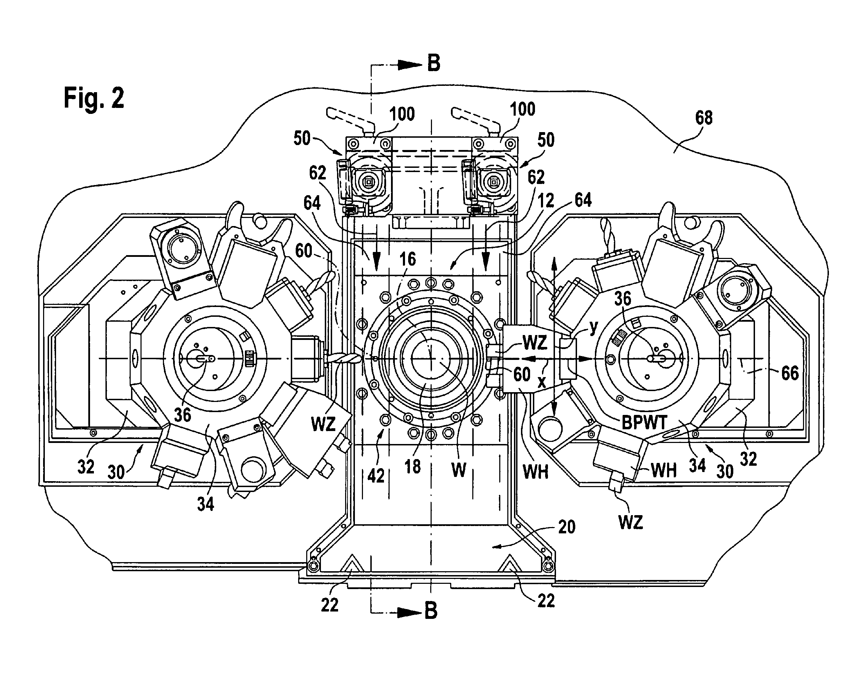

Um die Werkzeuge WZ unmittelbar im Arbeitsraum 42 vermessen zu können, sind, wie in Fig. 1 und 2 dargestellt, an der Werkzeugmaschine zwei Meßeinrichtungen 50 vorgesehen, die jeweils in der Lage sind, in einer Erfassungsebene 60 sich darstellende Geometriedaten von Objekten zu erfassen, wobei die Erfassungsebenen 60 innerhalb eines sich ausgehend von der jeweiligen Meßeinrichtung in einer Beobachtungsrichtung 62 erstreckenden Erfassungsräumen 64 liegen, und sich quer, das heißt insbesondere senkrecht zu den Beobachtungsrichtungen 62 erstrecken.

Vorzugsweise liegen dabei die Erfassungsebenen 60 in einer durch die Spindelachse 16 und in X-Richtung verlaufenden geometrischen Ebene 66, die somit parallel zur X-Richtung und Z-Richtung verläuft und außerdem liegen die Erfassungsräume 64 beiderseits jeweils neben der Spindelachse 16, und zwar in einem Abstand von dieser, welcher in der Größenordnung eines maximalen Werkstückradius liegt, so daß die Möglichkeit besteht, ein sich in Arbeitsstellung in der X/Z-Ebene 66 erstreckendes Werkzeug WZ, beispielsweise vor und/oder nach einer Bearbeitung des Werkstücks W, zu vermessen. Beispielsweise sind die Meßeinrichtungen 50 so angeordnet, daß jedem der Werkzeugträger 30 eine eigene Meßeinrichtung 50 zugeordnet ist.

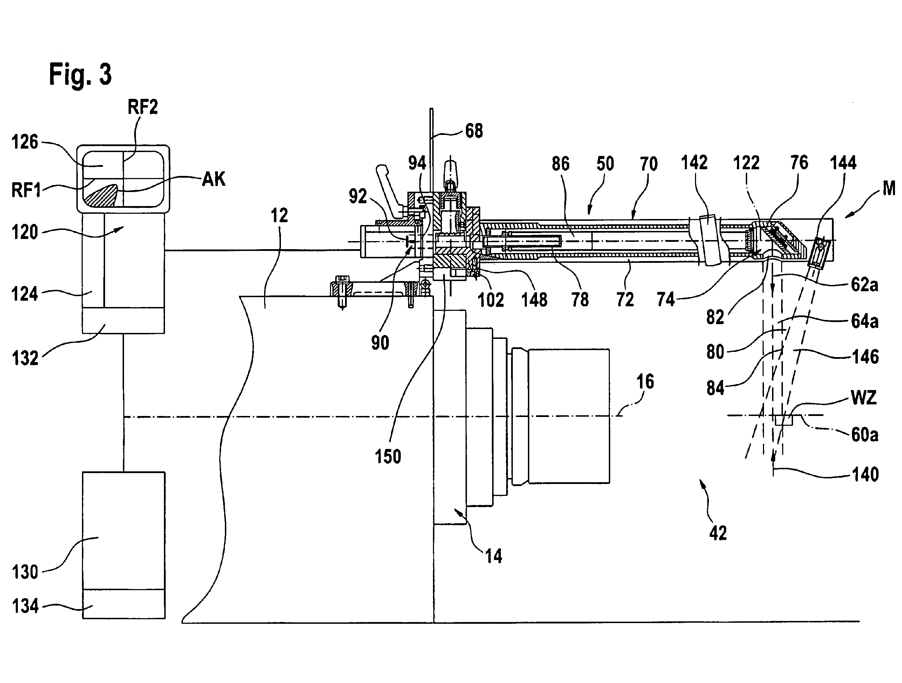

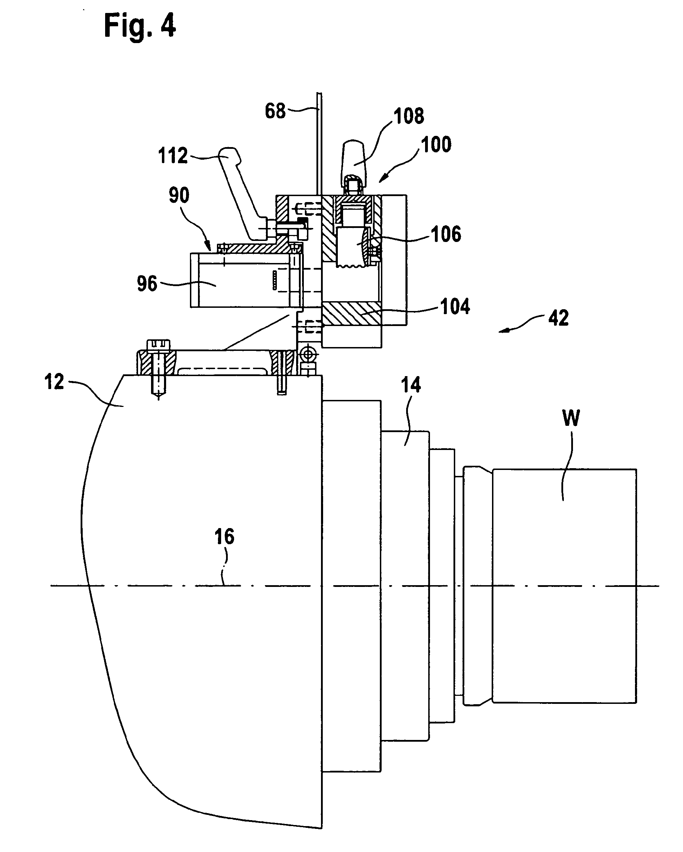

Wie in Fig. 3 und 4 exemplarisch anhand einer der Meßeinrichtungen 50 dargestellt, umfaßt jede der Meßeinrichtungen 50 einen sich ausgehend von einer Wand 68 des Arbeitsraums 42 in den Arbeitsraum 42 hinein erstreckenden Arm 70, welcher ein rohrförmiges Gehäuse 72 für eine als Ganzes mit 74 bezeichnete Abbildungsoptik umfaßt, die beispielsweise einen Umlenkspiegel 76 sowie eine Teleskopoptik 78 aufweist, wobei ein den Erfassungsraum 64 definierender Beobachtungsstrahlengang 80 sich ausgehend von einer Beobachtungsöffnung 82 des Gehäuses 72 mit einem externen Ast 84 in der Beobachtungsrichtung 62 erstreckt und auf die Erfassungsebene 60 trifft.

Ein von der Beobachtungsöffnung 82 ausgehend sich in dem Gehäuse 72 erstreckender interner Ast 86 des Beobachtungsstrahlengangs 80 wird durch den Umlenkspiegel 76 umgelenkt, durchsetzt die Teleskopoptik 78 und tritt in eine Bilderfassungseinheit 90 ein, in welcher ein elektronischer Kamerabaustein 92 angeordnet ist. Die Abbildungsoptik 74 ist dabei so aufgebaut, daß sie die Erfassungsebene 60 auf eine Detektorfläche 94 des elektronischen Kamerabausteins 92 scharf abbildet.

Der das rohrförmige Gehäuse 72 umfassende Arm 70 ist lösbar in einer Halterung 100 montierbar, und zwar durch einen an dem Arm 70 angeordneten Einsteckzapfen 102, welcher in eine Zapfenaufnahme 104 der Halterung 100 einsteckbar und durch einen an der Zapfenaufnahme 104 gelagerten Spannkörper 106 in der Zapfenaufnahme 104 präzise und wiederholgenau festlegbar ist. Der Spannkörper 106 ist dabei vorzugsweise durch eine Spannkörperbetätigung 108 zum Festlegen des Einsteckzapfens 102 auf diesen zu bewegbar, wobei die Spannkörperbetätigung 108 manuell betätigbar ist.

Die Fixierung des Arms 70 über den Einsteckzapfen 102 und die Zapfenaufnahme 104 erfolgt beispielsweise dann, wenn der Einsteckzapfen 102 ein für Werkzeughalter üblicher Einsteckzapfen ist und die Zapfenaufnahme 104 ebenfalls entsprechend ausgebildet ist, präzise und wiederholgenau.

Die Halterung 100 ist vorzugsweise auf einer dem Arbeitsraum 42 zugewandten Seite der Wand 68 angeordnet, während auf einer dem Arbeitsraum 42 abgewandten Seite der Wand 68 die Bilderfassungseinheit 90 an der Halterung 100 angeordnet ist.

Diese umfaßt neben dem elektronischen Kamerabaustein 92 ein Gehäuse 96, welches ebenfalls mit der Halterung 100 lösbar, beispielsweise über eine Fixiereinrichtung 112, verbunden ist.

Bei in die Halterung 100 eingestecktem Arm 70 erstreckt sich der interne Ast 86 des Beobachtungsstrahlengangs 80 auch durch den Einsteckzapfen 102 und durch die Halterung 100 hindurch bis zum elektronischen Kamerabaustein 92, wobei der interne Ast 86 auf seinem ganzen Wege von dem elektronischen Kamerabaustein 92 bis zur Beobachtungsöffnung 82 sowohl durch die Halterung 100 als auch den sich daran anschließenden Arm 70 gegenüber den Bedingungen im Arbeitsraum 42 geschützt verläuft, während sich der externe Ast 84 ausgehend von der Beobachtungsöffnung 82 in der Beobachtungsrichtung 62 frei im Arbeitsraum 42 bis zur Erfassungsebene 60 ausbreitet.

Bei dem ersten Ausführungsbeispiel der erfindungsgemäßen Werkzeugmaschine ist somit der Arm 70 in die Halterung 100 einsetzbar, um diesen in eine Meßstellung M zu bringen, beispielsweise wenn eines der Werkzeuge WZ in der Erfassungsebene 60 vermessen werden soll, und nach der Vermessung besteht die Möglichkeit, den Arm 70 aus der Halterung 100 zu lösen, beispielsweise manuell aus dem Arbeitsraum 42 zu entfernen, um den Arm 70 in eine Ruhestellung zu bringen, wobei zum Schutz des elektronischen Kamerabausteins 92 ein zeichnerisch in Fig. 4 nicht dargestellter Blindstopfen in die Zapfenaufnahme 104 eingesetzt wird.

Der Vorteil dieser Lösung, bei welcher nach Entfernen des Arms 70 aus dem Arbeitsraum 42 eine Trennung der Bilderfassungseinheit 90 von der Abbildungsoptik 74 erfolgt, ist darin zu sehen, daß durch die stationäre Anordnung der Bilderfassungseinheit 90 außerhalb des Arbeitsraums 42 die Möglichkeit besteht, die Bilderfassungseinheit 90 einerseits geschützt und andererseits stationär mit einer Bildverarbeitungseinheit 120 verbunden anzuordnen, so daß eine Vielzahl von Problemen, die bei einer trennbaren elektrischen Signalübertragung bestehen, durch die stationäre Anordnung der Bilderfassungseinheit 90 vermieden werden kann.

Bei dem dargestellten Ausführungsbeispiel erstreckt sich der Arm 70 mit seiner Längsachse 122 vorzugsweise ungefähr parallel zur Spindelachse 16 und der externe Ast 84 des Beobachtungsstrahlengangs erstreckt sich vorzugsweise quer zur Spindelachse 16 und quer zur X-Richtung sowie senkrecht zur Erfassungsebene 60.

Ferner besteht bei diesem Ausführungsbeispiel die Möglichkeit, die Halterung 100 direkt mit dem Maschinengestell 10 zu verbinden. Im dargestellten Ausführungsbeispiel ist die Halterung 100 über das Spindelgehäuse 12 an dem Maschinengestell 10 abgestützt, wobei somit bei stationärer Anordnung des Spindelgehäuses 12 relativ zum Maschinengestell 10 eine stationäre Anordnung der Meßeinrichtung 50 vorliegt oder im Falle eines relativ zum Maschinengestell 10 verfahrbaren Spindelgehäuses 12 eine bewegbare Anordnung der Meßeinrichtung 50, bei welcher die Position des externen Astes 84 des Beobachtungsstrahlengangs 80 im Arbeitsraum 42 zumindest relativ zum Spindelgehäuse 12 exakt und wiederholgenau festgelegt ist. Im letzteren Fall ist eine Relativposition des Spindelgehäuses 12 zum Maschinengestell 10 durch eine Maschinensteuerung 130, welche die Position des Spindelgehäuses 12 relativ zum Maschinengestell 10 definiert festlegt, aufgrund der Erfassung der Position des Spindelgehäuses 12 durch die Maschinensteuerung 130 relativ zum Maschinengestell 10 ermittelbar.

Damit liegt die Lage des externen Astes 84 des Beobachtungsstrahlengangs 80 relativ zum Maschinengestell 10 fest oder ist stets über die Maschinensteuerung 130 mit der notwendigen Präzision ermittelbar.

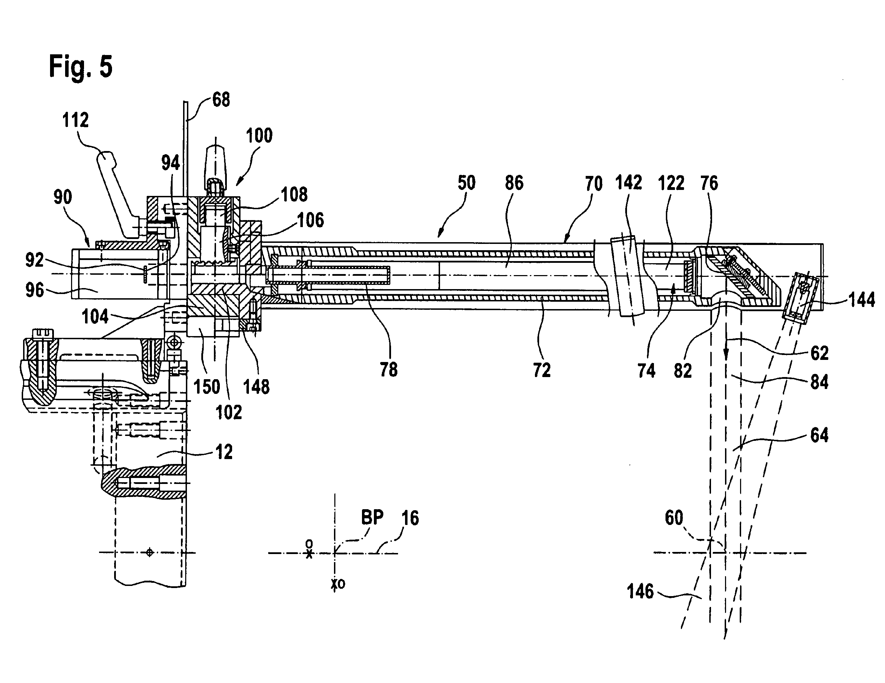

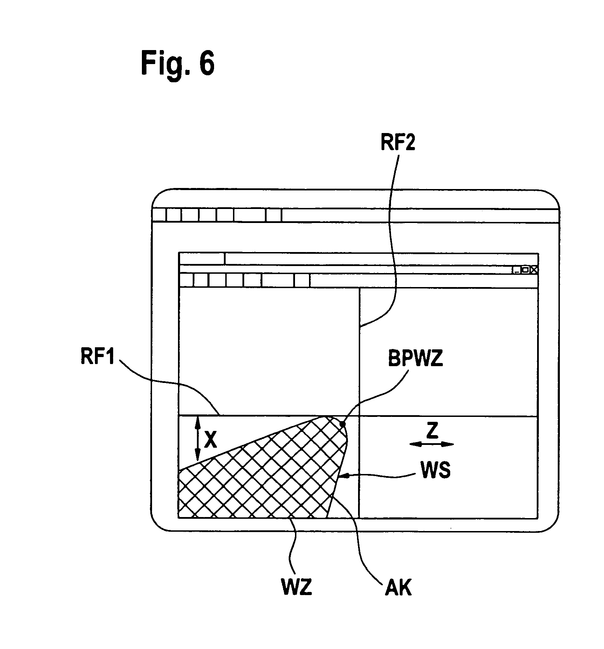

Mit der Meßeinrichtung 50 gemäß dem ersten Ausführungsbeispiel der erfindungsgemäßen Werkzeugmaschine besteht die Möglichkeit, von einem vom externen Ast 84 des Beobachtungsstrahlengangs 80 erfaßten Objekt, beispielsweise einem der sich in der Erfassungsebene 60 erstreckenden Werkzeuge WZ, eine sich in der Erfassungsebene 60 als Schattenbild darstellende geometrische Außenkontur AK, beispielsweise im Bereich einer Werkzeugspitze, dadurch zu erfassen, daß mit der Maschinensteuerung 130 eine Positionierung einer Abbildung der Außenkontur AK relativ zu Referenzlinien RF1 und RF2 erfolgt, die im einfachsten Fall ein Fadenkreuz bildende Geraden darstellen und deren Position relativ zu einem Bezugspunkt BP (Fig. 5) am Maschinengestell 10, beispielsweise einem definierten Bezugspunkt BP auf der Spindelachse 16, entweder festliegt oder durch die Maschinensteuerung 130 ermittelbar ist (Fig. 3, 6).

Zur Vermessung der Lage der Außenkontur AK, das heißt zur Festlegung von deren absoluter Position relativ zum Bezugspunkt BP, wird das Werkzeug WZ mittels der Maschinensteuerung 130 relativ zum externen Ast 84 des Beobachtungsstrahlenfeldes 80 in der Erfassungsebene 60 so lange verschoben, bis die Abbildung der Außenkontur AK die Referenzlinien RF1 und RF2 berührt, ohne diese zu übergreifen.

Die Position eines Bezugspunktes BPWZ, (Fig. 6) des Werkzeugs WZ, in welcher die Abbildung der durch Schattenbildung erhaltenen Außenkontur AK in der Referenzebene 60 die Referenzlinien RF1 und RF2 berührt und die Position eines entsprechenden Bezugspunktes BPWT (Fig. 2) des Werkzeugträgers 30, lassen sich durch die Maschinensteuerung 130 ermitteln und können somit in Relation gesetzt werden zu der Lage der Referenzlinien RF1 und RF2 relativ zu dem Bezugspunkt BP am Maschinengestell 10, der bei unverschieblichem Spindelgehäuse 12 durch die Anordnung der Meßeinrichtung 50 relativ zu dem Bezugspunkt BP des Maschinengestells 10 festlegbar ist oder bei einem durch die Maschinensteuerung 130 verschiebbaren Spindelgehäuse 12 durch die Maschinensteuerung 130 ermittelbar ist.

Die Referenzlinien RF1 und RF2 können mit der erfindungsgemäßen Lösung entweder in bekannter Weise als Fadenkreuz in der Teleskopoptik 78 realisiert und mit auf den elektronischen Kamerabaustein 92 abgebildet werden oder aber auch als in der Bildverarbeitungseinheit 120, beispielsweise einem Speicher 124 derselben, gespeicherter Datensatz zur Generierung der Referenzlinien RF1 und RF2, beispielsweise durch Festlegung bestimmter Pixelreihen des elektronischen Kamerabausteins 92 als Referenzlinien RF1 und RF2, die somit softwaregenerierte Referenzlinien darstellen.

Beispielsweise ist zur visuellen Überprüfung der Position der Außenkontur AK der Werkzeugspitze WS des Werkzeugs WZ die Bildverarbeitungseinheit 120 mit einem Bildschirm 126 versehen, der die von dem elektronischen Kamerabaustein 92 erfaßte optische Information für einen Maschinenbediener vergrößert darstellt und insbesondere die Lage der Außenkontur AK relativ zu den Referenzlinien RF1 und RF2 zeigt, wie in Fig. 6 vergrößert dargestellt.

Damit besteht die Möglichkeit, durch Bewegung des Werkzeugs WZ mittels des jeweiligen Schlittensystems 40 die Außenkontur AK der Werkzeugspitze WS mit der Außenkontur AK exakt mit Berührung der Referenzlinien RF1 und RF2 zu positionieren, ohne daß die Außenkontur AK die Referenzlinien RF1 und/oder RF2 übergreift.

In diesem Fall steht das Werkzeug WZ mit der Außenkontur AK der Werkzeugspitze WS in einer durch die Referenzlinien RF1 und RF2 exakt festgelegten Position, die in Relation zu der von der Maschinensteuerung 130 durch Bewegen des Werkzeugträgers 30 erreichten Relativposition des Bezugspunktes BPWT des Werkzeugträgers 30 in Bezug auf den Bezugspunkt BP am Maschinengestell 10 gesetzt werden kann.

Durch eine derartige Messung besteht die Möglichkeit, sämtliche Positionierfehler des Bezugspunktes BPWZ des Werkzeugs WZ relativ zum Werkzeughalter WH und Positionierfehler des Werkzeughalters WH und relativ zum Werkzeugträger 30 zu korrigieren.

Dabei ist es besonders vorteilhaft, wenn die Bildverarbeitungseinheit 120 mit der Maschinensteuerung 130 direkt gekoppelt ist und somit die Zuordnung der durch die Referenzlinien RF1 und RF2 festgelegten Referenzposition zu der tatsächlich von der Maschinensteuerung 130 angefahrenen Position des Bezugspunktes BPWT des Werkzeugträgers 30 durch direkte Kommunikation zwischen der Bildverarbeitungseinheit 120 und der Maschinensteuerung 130 erhältlich ist.

Im einfachsten Fall erfolgt das Anlegen der Außenkontur AK in den Referenzlinien RF1 und RF2 durch manuelle Bedienung der Maschinensteuerung 130 und somit manuell gesteuertes Verfahren des Schlittensystems 40 so lange, bis die Außenkontur AK berührend an den Referenzlinien RF1 und RF2 anliegt wobei das Anliegen über den Bildschirm 126 von der Bedienungsperson überprüft werden kann.

Alternativ dazu ist vorgesehen, daß die Bildverarbeitungseinheit 120 über ein Programm den Abstand der Außenkontur AK beispielsweise in X-Richtung von der Referenzlinie RF1 und in Z-Richtung von der Referenzlinie RF2 ermittelt und diese Abstandswerte einer Vermessungssteuerung 132 übermittelt, die die Maschinensteuerung 130 dann so ansteuert, daß die Maschinensteuerung 130 das Schlittensystem 40 derart bewegt, daß die Abstände in X-Richtung und Z-Richtung schrittweise geringer werden, bis eine Berührung der Referenzlinien RF1 in X-Richtung und RF2 in Z-Richtung erfolgt.

Dieser Zustand wird dann erneut von der Bildverarbeitungseinheit 120 der Maschinensteuerung 130 übermittelt, die in der Lage ist, aufgrund der dieser vorliegenden Daten über die Position des Bezugspunktes BPWT des Werkzeugträgers 30 dieser Position dann die entsprechende Lage der Außenkontur AK des Werkzeugs WZ zuzuordnen, und zwar vorzugsweise werkzeugspezifisch, so daß in einer Werkzeugdatei 134 der Maschinensteuerung 130 diese Relativposition der Außenkontur AK zur Position des Bezugspunktes BPWT des Werkzeugträgers 30 abgespeichert und auch für spätere Bearbeitungsvorgänge verwendet werden kann.

Um in der Erfassungsebene 60 ein präzises Schattenbild der Außenkontur AK des Werkzeugs WZ zu erhalten, wie in Fig. 6 dargestellt, ist es erforderlich, daß das Werkzeug WZ in der Erfassungsebene 60 durch ein diffuses Hintergrundlicht 140 beleuchtet wird, welches von einer dem externen Ast 84 des Beobachtungsstrahlengangs 80 abgewandten Seite des Werkstücks WZ auf dieses fällt und somit zu einem scharfen Schattenbild der in der Erfassungsebene 60 liegenden Außenkontur AK führt, die durch den externen Ast 84 des Beobachtungsstrahlengangs 80 erfassbar ist.

Ein derartiges Hintergrundlicht 140 läßt sich entweder auf der dem externen Ast 84 des Beobachtungsstrahlengangs 80 entgegengesetzten Seite der Erfassungsebene 60 angeordnete diffuse Strahlungsquellen erzeugen oder durch diffuse Reflexion des Lichts einer am Arm 70 angeordneten Strahlungsquelle 142, wobei die Strahlung vorzugsweise eine außerhalb des sichtbaren Bereichs im Infraroten liegende Wellenlänge aufweist.

Die Erzeugung von diffusem Hintergrundlicht 140 mittels der am Arm 70 angeordneten Strahlungsquelle 142 erfolgt vorzugsweise durch Ausleuchten von den Arbeitsraum 42 begrenzenden Wänden und Abdeckungen, die vorzugsweise eine reflektierende, jedoch gebürstete Oberfläche aufweisen und daher auch bei direkter Anstrahlung das diffuse Hintergrundlicht 140 ergeben.

Darüber hinaus ist an dem Arm 70 noch eine Markierungslichtquelle 144 vorgesehen, die ein Lichtstrahlungsfeld 146 erzeugt, das dazu dient, entweder für einen Maschinenbediener im Arbeitsraum 42 kenntlich zu machen, wo ungefähr der Erfassungsraum 64 verläuft, wobei der Bediener beispielsweise daran, daß das in den Erfassungsraum 64 eintretende Werkzeug WZ mit einer Wellenlänge im sichtbaren Bereich angeleuchtet wird, erkennen kann, daß das Werkzeug WZ nunmehr den Erfassungsraum 64 erreicht hat und somit durch die Meßeinrichtung 50 vermessen werden kann.

Alternativ dazu ist es aber auch denkbar, durch das Anleuchten des Werkzeugs WZ mit dem Lichtstrahlungsfeld 146 der Markierungslichtquelle 144 in der Erfassungsebene 60 ein Bild zu erzeugen, durch welches von der Bildverarbeitungseinheit 120 das in den Erfassungsraum 64 eintretendes Objekt erkannt werden kann, so daß nach Erkennen eines derartigen, durch das Lichtstrahlungsfeld 146 markierten Objekts, in diesem Fall des Werkzeugs WZ, die Prozesse gestartet werden können, mit welchen die Außenkontur AK der Spitze WS des Werkzeugs WZ erfaßt und deren Annäherung an die Referenzlinien RF1 und RF2 in der beschriebenen Weise erreicht werden kann, um beim Berühren der Referenzlinien RF1 und RF2 die Relativposition der Außenkontur AK relativ zur Position des Bezugspunkte BPWT des Werkzeugträgers 30 ermitteln zu können.

Zur Speisung der Strahlungsquelle 142 und der Markierungslichtquelle 144 ist der Arm 70 vorzugsweise mit einer Kontakteinheit 148 versehen, die mit einer ein Gegenstück darstellenden Gegenkontakteinheit 150 am Halter 100 dann zwangsläufig in Wirkverbindung steht, wenn der Einsteckzapfen 102 des Arms 70 in die Zapfenaufnahme 104 der Halterung 100 eingesteckt ist.

Ferner ist die Kontakteinheit 148 zwangsläufig von der Gegenkontakteinheit 150 dann lösbar, wenn der Einsteckzapfen 102 des Arms 70 aus der Zapfenaufnahme 104 herausgezogen wird, um den Arm 70 aus dem Arbeitsraum 42 zu entfernen.

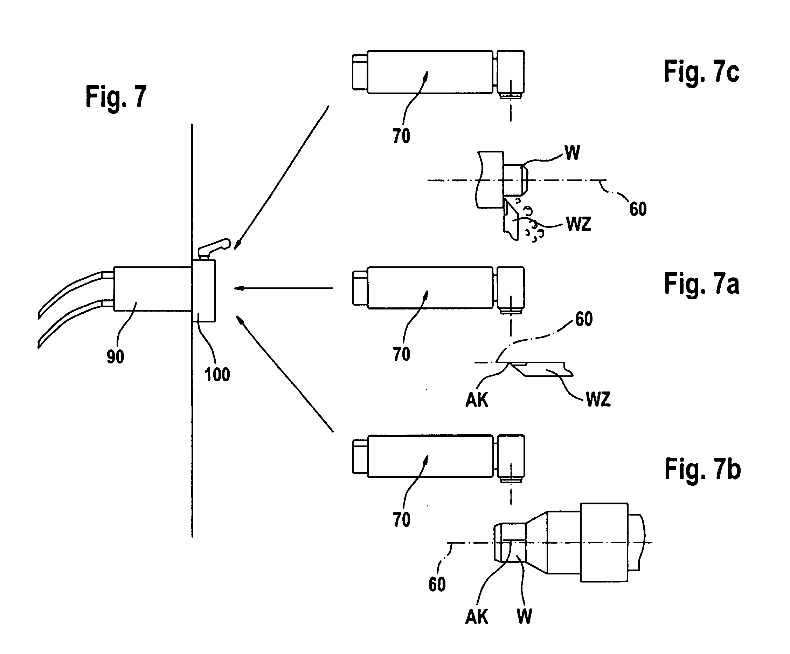

Im Zusammenhang mit dem ersten Ausführungsbeispiel wurde bislang lediglich beschrieben, daß das erfindungsgemäße Meßsystem 50 mit dem Arm 70 dazu eingesetzt wird, wie in Fig. 7a nochmals schematisch dargestellt, die Außenkontur AK eines der Werkzeuge WZ zu vermessen.

Es besteht aber auch, wie beispielsweise in Fig. 7b schematisch dargestellt, die Möglichkeit, den Arm 70 dazu einzusetzen, als Objekt nicht das Werkstück WZ zu vermessen, sondern ein Werkstück W, wobei dessen in der Erfassungsebene 60 liegende Außenkontur AK ebenfalls als Schattenbild erfaßt wird.

Eine weitere Möglichkeit besteht darin, die Meßeinrichtung mit dem Arm 70 nicht nur dazu einzusetzen, das Werkzeug WZ oder das Werkstück W zu vermessen, sondern die Bilderfassungseinheit 90 mit dem elektronischen Kamerabaustein 92 dazu einzusetzen, einen Bearbeitungsprozeß des Werkstücks W durch das Werkzeug WZ zu beobachten, wobei in der bereits beschriebenen Weise durch die im Arm 70 dargestellte Abbildungsoptik 74 die sich in der Erfassungsebene 60 abzeichnenden Konturen auf den elektronischen Kamerabaustein 92 abgebildet und durch die Bilderfassungseinheit 90 erfaßt werden können.

Alternativ dazu ist es aber auch denkbar, sowohl für die Vermessung des Werkstücks W, wie in Fig. 7b dargestellt, als auch für die Beobachtung des Bearbeitungsprozesses, wie in Fig. 7c dargestellt, Arme 70 mit modifizierter Abbildungsoptik 74 einzusetzen, wobei die Abbildungseigenschaften der Abbildungsoptik 74 jeweils den zu erfassenden Geometriedaten angepaßt sind und somit auch beispielsweise eine Anpassung der Ausdehnung des Erfassungsraums 64 und der Lage der Erfassungsebene 60 an die unterschiedlichen Aufgabenstellungen erfolgen kann.

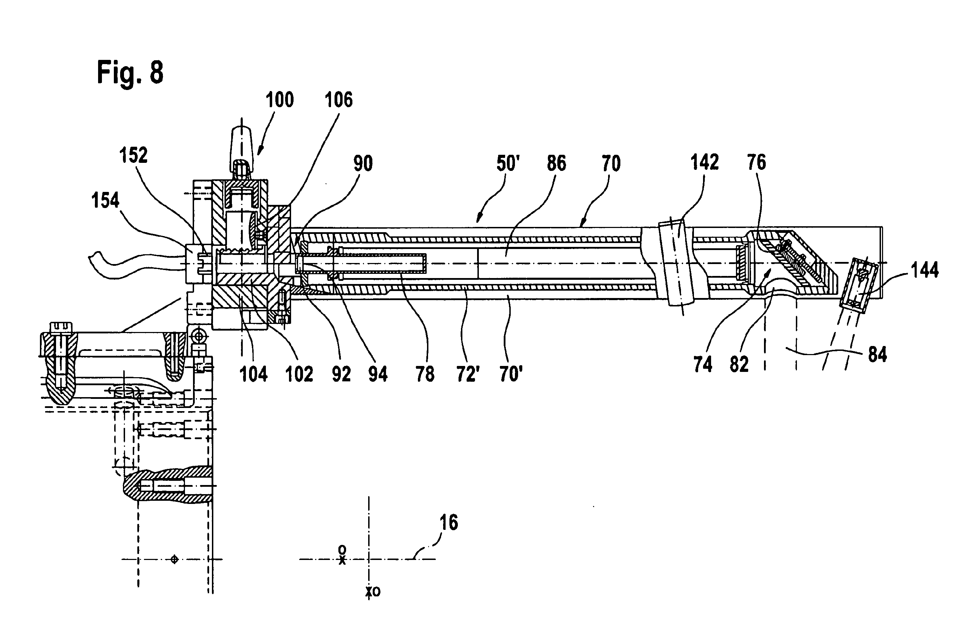

Bei einem zweiten Ausführungsbeispiel, dargestellt in Fig. 8 ist der Arm 70' der Meßeinrichtung 50' derart ausgebildet, daß in dem rohrförmigen Gehäuse 72' nicht nur die Abbildungsoptik 74 mit dem Umlenkspiegel 76 und der Teleskopoptik 78 angeordnet sind, sondern das Gehäuse 72' gleichzeitig als Gehäuse für die Bilderfassungseinheit 90 und den elektronischen Kamerabaustein 92 dient, so daß die Abbildungsoptik 74 mitsamt der Bilderfassungseinheit 90 eine durch das Gehäuse 72' umschlossene integrale Einheit bilden, die als Ganzes von der Ruhestellung in die Meßstellung M und umgekehrt bewegt werden kann.

In diesem Fall ist es nicht mehr erforderlich, daß sich durch den Einsteckzapfen 102 der interne Ast 86 des Beobachtungsstrahlengangs 80 hindurcherstreckt, sondern durch den Einsteckzapfen 102 sind elektrische Leitungen zu einer Kontakteinheit 152 geführt, die mit einer an dem Halter 100 vorgesehenen Gegenkontakteinheit 154 dann zusammenwirkt, wenn der Einsteckzapfen 102 in die Zapfenaufnahme 104 eingesteckt und durch den Spannkörper 106 fixiert ist. Von der Gegenkontakteinheit 154 führen dann jeweils Leitungen zu der Bildverarbeitungseinheit 120.

Alternativ zum Vorsehen der Kontakteinheit 152 und der Gegenkontakteinheit 154, die über mechanische Kontakte miteinander wechselwirken, ist es ebenfalls denkbar, miteinander induktiv oder kapazitiv wechselwirkende Informationsübertragungseinheiten vorzusehen, die sich noch besser als mechanische Kontakte für ein häufiges Herstellen und Lösen einer Verbindung zur Informationsübertragung, insbesondere von dem elektronischen Kamerabaustein 92 zu der Bildverarbeitungseinheit 120, eignen.

Im übrigen ist das zweite Ausführungsbeispiel insoweit als dieselben Bezugszeichen wie beim ersten Ausführungsbeispiel eingesetzt werden, mit denselben Bezugszeichen versehen, so daß bezüglich dieses Teils vollinhaltlich auf das erste Ausführungsbeispiel Bezug genommen wird.

Im Zusammenhang mit dem ersten und zweiten Ausführungsbeispiel wurde lediglich eine Abbildungsoptik 74 beschrieben, welche in der Lage ist, eine Erfassungsebene auf die Detektorfläche 94 des Kamerabausteins 92 abzubilden.

Bei einem dritten Ausführungsbeispiel ist die Abbildungsoptik 74' so ausgebildet, daß der Beobachtungsstrahlengang 80' nach dem Umlenkspiegel 76 in einen Strahlteiler 155 eintritt, aus welchem ein erster Ast 156₁ und ein zweiter Ast 156₂ austreten. Der erste Ast 156₁ durchsetzt ein erstes optisches Schaltelement 157₁, aus welchem dann der erste externe Ast 84₁ des Beobachtungsstrahlengangs austritt, der zu der in bekannter Weise angeordneten ersten Erfassungsebene 60₁ führt, die parallel zur X-Richtung und Z-Richtung der Werkzeugmaschine verläuft.

Der zweite Ast 156₂ tritt ebenfalls durch ein optisches Schaltelement 157₂ hindurch und trifft außerdem auf einen Umlenkspiegel 158, so daß sich nach diesem ein zweiter externer Ast 84₂ des Beobachtungsstrahlengangs 80' in Richtung einer zweiten Erfassungsebene 60₂ ausbreitet, die in diesem Fall sich jedoch parallel zur X-Richtung und zur Y-Richtung erstreckt.

Der Beobachtungsstrahlengang 80' ist nun so abgestimmt, daß je nach dem, welches der optischen Schaltelemente 157₁ oder 157₂ den Beobachtungsstrahlengang 80' passieren läßt, entweder eine Abbildung eines sich in der ersten Erfassungsebene 60₁ erstreckenden Objekts oder eine Abbildung eines sich in der zweiten Erfassungsebene 60₂ erstreckenden Objekts auf die Detektorfläche 94 des elektronischen Kamerabausteins 92 erfolgt und somit die Möglichkeit besteht, ein Objekt abwechselnd in der einen Erfassungsebene 60₁ oder der anderen Erfassungsebene 60₂ zu erfassen.

Es besteht aber auch die Möglichkeit, ein und dasselbe Werkzeug WZ in jeder der Erfassungsebenen 60₁ und 60₂ zu positionieren und einerseits in der Erfassungsebene 60₁ und andererseits in der Erfassungsebene 60₂ zu vermessen, so daß die Außenkontur AK sowohl in der ersten Erfassungsebene 60₁ als auch in der zweiten Erfassungsebene 60₂ und somit die Außenkontur AK eines Werkzeugs WZ in unterschiedlichen Raumrichtungen exakt bestimmt werden kann.

Hinsichtlich der übrigen Teile des dritten Ausführungsbeispiels wird vollinhaltlich auf die Ausführungen zu den voranstehenden Ausführungsbeispielen Bezug genommen.

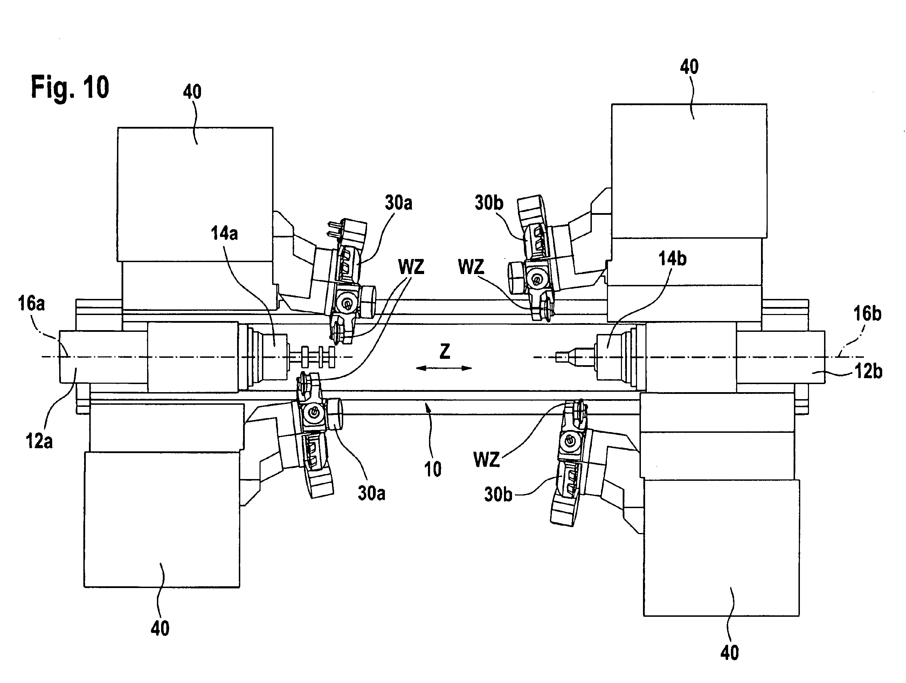

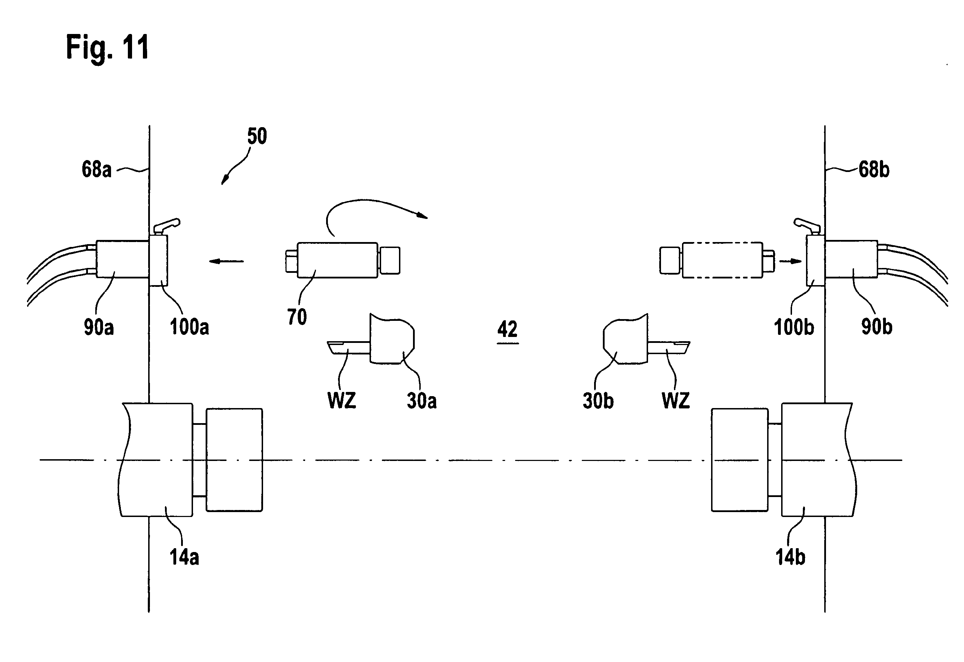

Bei einem vierten Ausführungsbeispiel einer erfindungsgemäßen Werkzeugmaschine, beispielsweise dargestellt in den Fig. 10 und 11 sind zwei einander gegenüberliegende Werkstückspindeln 14a und 14b vorgesehen, wobei jeder der Werkstückspindeln 14a und 14b beispielsweise zwei Werkzeugträger 30a bzw. 30b zugeordnet sind.

Um die Werkzeuge WZ aller Werkzeugträger 30a, 30b vermessen zu können, ist, wie in Fig. 11 dargestellt, die Meßeinrichtung 50 in gleicher Weise ausgebildet wie beim ersten Ausführungsbeispiel, allerdings mit dem Unterschied, daß an einander gegenüberliegenden Wänden 68a und 68b des Arbeitsraums 42 Halterungen 100a bzw. 100b vorgesehen sind und der Arm 70 entweder in die Halterung 100a oder in die Halterung 100b eingesteckt werden kann und somit die Abbildungsoptik 74 entweder mit der Bilderfassungseinheit 90a oder der identisch ausgebildeten Bilderfassungseinheit 90b, die beide nicht entnehmbar sind, zusammenwirkt, um die Werkzeuge WZ der Werkzeugträger 30a bzw. 30b vermessen zu können.

Schließlich wird hinsichtlich der übrigen Teile vollinhaltlich auf die Ausführungen zu den voranstehenden Ausführungsbeispielen Bezug genommen.

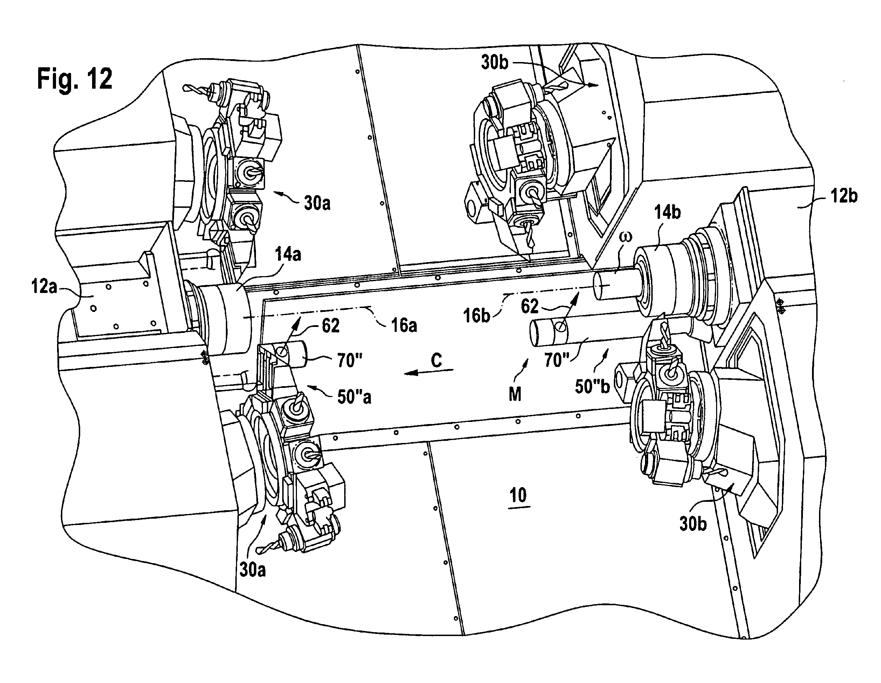

Bei einem fünften Ausführungsbeispiel, dargestellt in Figur 12, ist den einander gegenüberliegenden Werkstückspindeln 14a und 14b jeweils nur eine Meßeinrichtung 50'a, 50'b zugeordnet, die auf einer dem Maschinengestell 10 zugewandten Seite der jeweiligen Spindelachsen 16a bzw. 16b angeordnet ist, wobei die Beobachtungsrichtungen 62 jeweils von den Armen 70 zu den Spindelachsen 16a, 16b und somit vom Maschinengestell 10 weg gerichtet sind.

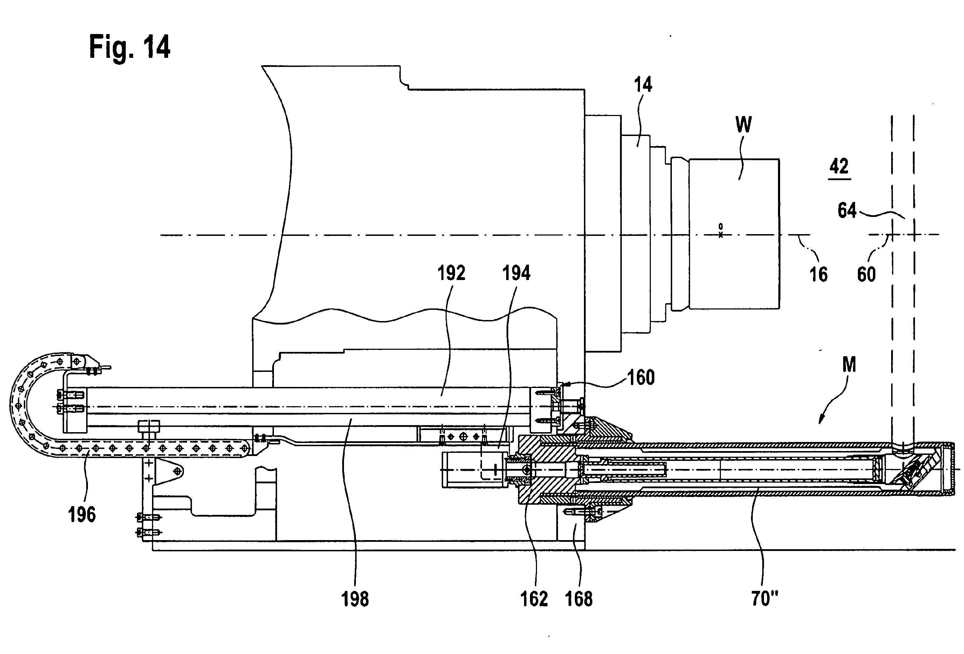

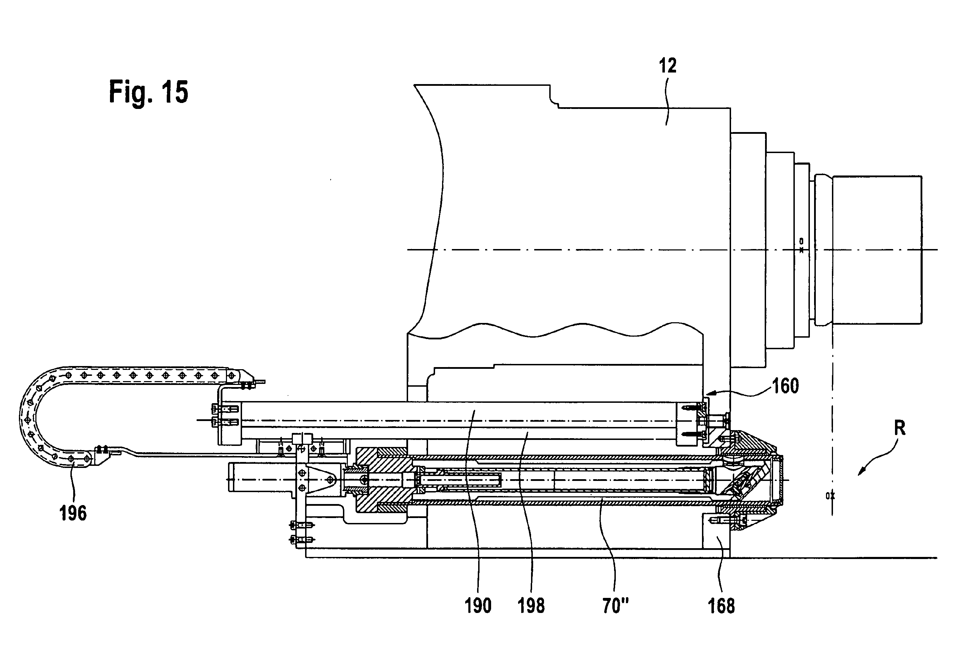

Bei diesem fünften Ausführungsbeispiel ist die Meßeinrichtung 50" vorzugsweise in einem Fußbereich 160 des Spindelgehäuses 12 angeordnet und zwar dergestalt, daß der Arm 70" von der in Figur 14 dargestellten Meßstellung M, in welcher der Arm über den Fußbereich 160 des Spindelgehäuses 12 in den Arbeitsraum 42 übersteht, so daß der Erfassungsraum 64 auf einer der Werkstückspindel 14 abgewandten Seite des Werkstücks W liegt und von der Spindelachse 16 durchsetzt ist, und in einer in Figur 15 dargestellten Ruhestellung R einfahrbar ist, in welcher der Arm 70" in den Fußbereich 160 eingefahren ist, und nicht mehr in den Arbeitsraum 42 hineinragt.

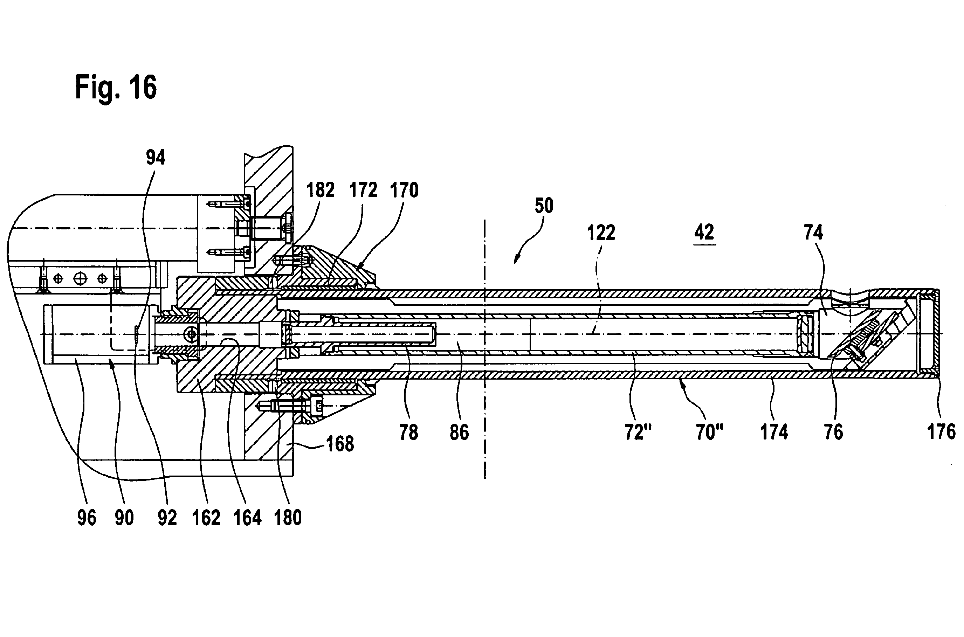

Wie insbesondere in Figur 16 dargestellt, umfaßt der Arm 70" das Gehäuse 72" für die Abbildungsoptik 74, welche vom Prinzip her in gleicher Weise ausgebildet ist wie bei den bislang beschriebenen Ausführungsbeispielen und insbesondere den Umlenkspiegel 76 sowie die Teleskopoptik 78 aufweist.

An das rohrförmige Gehäuse 72" für die Abbildungsoptik 74 schließt sich ein endseitig des Arms 70" angeordneter Abschlußkörper 162 an, der einerseits das rohrförmige Gehäuse 72' abschließt und andererseits auf einer dem rohrförmigen Gehäuse 72" gegenüberliegenden Seite die Bilderfassungseinheit 90 über deren Gehäuse 96 trägt, in welchem der elektronische Kamerabaustein 92 wie beschrieben angeordnet ist.

Der Abschlußkörper 162 weist dabei einen Durchgang 164 auf, durch welchen der interne Ast 86 des Beobachtungsstrahlengangs 80 durch den Abschlußkörper 162 hindurchtreten und in die Bilderfassungseinheit 90 eintreten kann, um auf die Detektorfläche 94 des elektronischen Kamerabausteins 92 aufzutreffen.

Bei dem Arm 70" bildet das Gehäuse 72" mit dem Gehäuse 96 der Bilderfassungseinheit 90 eine fest verbundene Einheit, allerdings dergestalt, daß die gesamte Bilderfassungseinheit 90 mit ihrem Gehäuse 96 und im wesentlichen auch der Abschlußkörper 162 sowohl in der Meßstellung M als auch in der Ruhestellung R auf einer dem Arbeitsraum 42 abgewandten Seite einer Stirnwand 168 des Fußbereichs 160 liegen und somit gegen Einflüsse aus dem Arbeitsraum 42 geschützt angeordnet sind.

Die Fixierung des gesamtem Meßeinrichtung 50" erfolgt durch eine Halterung 170, welche an der an den Arbeitsraum 24 angrenzenden Stirnwand 168 des Fußbereichs 160 gehalten ist und einerseits eine Führungsbüchse 172 umfaßt, die den Arm 70" im Bereich eines Außenrohrs 174 in Richtung seiner Längsrichtung 122 verschiebbar führt, so daß der Arm 70" von der in Figur 16 dargestelltem, im wesentlichen in den Arbeitsraum 42 hineinragenden Meßstellung M in die in Figur 15 dargestellte Ruhestellung R bringbar ist, in welchem der Arm 70" mit einem endseitigen Deckel 176 die Führungsbüchse 172 der Halterung 170 abschließt, so daß der gesamte Arm 70" im wesentlichen in dem Fußbereich 160 des Spindelgehäuses 12 und außerhalb des Arbeitsraums 42 angeordnet ist.

Um den Arm 70" in den Meßstellung M mit seiner Längsrichtung 122 präzise ausgerichtet und in Richtung der Längsrichtung 122 präzise angeordnet positionieren zu können, ist die Halterung 170 mit einem ersten Formschlußelement 180 versehen, mit welchem ein zweites Formschlußelement 182, angeordnet an dem Abschlußkörper 162 des Arms 70", in Eingriff bringbar ist. Dabei werden beispielsweise das erste Formschlußelement 180 und das zweite Formschlußelement 182 als Ringe mit einer Hirthverzahnung ausgebildet, wie sie beispielsweise zur exakten Positionierung von Revolverköpfen verwendet werden.

Dabei ist das erste Formschlußelement 180 so an der Halterung 170 angeordnet, daß das zweite Formschlußelement 182 in dieses dann vollständig eingreift und exakt durch dieses positioniert ist, wenn der Arm 70" in seiner Meßstellung M steht.

Um den Arm 70" von der Meßstellung in die Ruhestellung und umgekehrt zu verfahren, ist ein Verschiebeantrieb 190, beispielsweise in Form eines Hydraulik- oder Pneumatikzylinders mit einem Zylindergehäuse 192 in dem Fußbereich 160 stationär angeordnet, während ein am Zylindergehäuse 192 geführter Aktor 194 des Verschiebeantriebs 190 auf den Abschlußkörper 162 wirkt und vorzugsweise mit diesem fest verbunden ist.

Durch den Verschiebeantrieb 190 sind somit auch die Formschlußelemente 180 und 182 in einander preßbar, um eine exakte und wiederholgenaue Positionierung des Arms 70" zu erreichen. Andererseits wird über den Aktor 194 der Arm 70" zusätzlich noch relativ zum Zylindergehäuse 192 auf dem Wege zur Ruhestellung geführt, so daß in der Ruhestellung R der Arm 70" einerseits in der Führungsbüchse 172 geführt ist und andererseits über den Aktor 194 und das Zylindergehäuse 192 ebenfalls nochmals relativ zum Fußbereich 160 des Spindelgehäuses 12 geführt ist.

Zweckmäßigerweise ist mit dem Abschlußkörper 162 auch noch eine Kabelführung 196 in Form einer Schleppkette verbunden, über welche die elektrischen Leitungen von der mit dem Arm 70" mitbewegten Bilderfassungseinheit 90 zu der stationären relativ zum Maschinengestell 10 angeordneten Bildverarbeitungseinheit 120 geführt sind.

Der Verschiebeantrieb 190 ist vorzugsweise ebenfalls über die Bildverarbeitungseinheit 120 steuerbar, so daß dann, wenn die Durchführung einer Messung im Arbeitsraum 42 durch die Meßeinrichtung 50" erforderlich ist, die Bildverarbeitungseinheit 120 ein Verfahren des Arms 70" mittels des Verschiebeantriebs 190 von der Ruhestellung R in die Meßstellung M erfolgen kann und dann in bekannter Weise innerhalb des Erfassungsraumes 64 Geometriedaten eines Objekts in der beschriebenen Art und Weise erfaßt werden können.

Sobald keine Messung mehr notwendig ist, steuert die Bildverarbeitungseinheit 120 den Verschiebeantrieb 190 so an, daß der Arm 70" in seine Ruhestellung R gebracht wird und somit außerhalb der Einflüsse des im Arbeitsraum UZ steht.

Vorzugsweise ist bei diesem Ausführungsbeispiel der Erfassungsraum 64 so angeordnet, daß die Erfassungsebene 60 durch die Spindelachse 16 verläuft, und somit die Möglichkeit besteht, alle Werkzeuge WZ, welche an dem Werkstück W zum Einsatz gebracht werden sollen, in die Erfassungsebene 60 bringbar sind, um mittels der Meßeinrichtung 50" vermessen zu lassen.

Der Erfassungsraum 64 verläuft dabei vorzugsweise quer zur Spindelachse 16, wird jedoch von dieser quer jedoch mittig durchsetzt.

Wie in Figur 12 dargestellt, ist jeder der Arbeitsspindeln 14a, 14b eine derartige Meßeinrichtung 50' zugeordnet, so daß vor dem in jeder der Arbeitsspindeln 14a, 14b eingespannten Werkstück W der jeweilige Erfassungsraum 64 liegt, in den dann die an diesem Werkstück W eingesetzten Werkzeuge WZ vermessen werden können.

Bei dem fünften Ausführungsbeispiel besteht neben der Möglichkeit, in der Meßstellung M Objekte zu vermessen, auch noch die Möglichkeit, im Verlauf der Linearverschiebung des Arms 70" von der Ruhestellung R in die Meßstellung M oder umgekehrt das Werkstück W, das in der jeweiligen Werkstückspindel 14 gehalten ist, zumindest optisch, beispielsweise durch sein Schattenbild, zu erfassen.

Damit besteht beispielsweise die Möglichkeit, zu erkennen, ob überhaupt das Werkstück W korrekt in der Werkstückspindel 14 angeordnet ist. Das Erfassen des Werkstücks W kann aber auch insoweit noch weitere Informationen liefern, als beispielsweise die Möglichkeit besteht, eine Außenkontur des Werkstücks W zu erfassen oder zumindest hinsichtlich der Ausdehnung quer zur Spindelachse 16 zu vermessen.

Die Meßgenauigkeit der Ausdehnung des Werkstücks W quer zur Spindelachse hängt dabei von der Qualität der Führung des Arms 70" auf dem Weg von der Ruhestellung R in die Meßstellung M oder umgekehrt ab und kann durch eine präzise Führung des Arms 70 ebenfalls ausreichend genau sein.

Darüber hinaus besteht auch noch die Möglichkeit, den Verschiebeweg des Arms 70" beim Bewegen desselben von der Ruhestellung R in die Meßstellung M und umgekehrt zu erfassen und somit auch zusätzlich noch ein Vermessen des Werkstücks W hinsichtlich seiner Ausdehnung in Richtung der Spindelachse 16 durchzuführen, wobei ebenfalls die Präzision der Messung in Richtung der Spindelachse 16 bedingt ist durch die Präzision, mit welcher die Position des Arms 70" zwischen der Ruhestellung R und der Meßstellung M erfassbar ist.

Neben einer Vermessung des Werkstücks W besteht auch noch die Möglichkeit, verfügbare Werkzeuge WZ zumindest hinsichtlich ihrer Anwesenheit oder ihrer groben Position ebenfalls beim Verfahren des Arms 70" von der Ruhestellung R in die Meßstellung M und umgekehrt aufgrund des sich dabei durch den Arbeitsraum 42 hindurchbewegenden Erfassungsraum 64 zu erfassen, um beispielsweise nachfolgend durch durch die Maschinensteuerung 130 aufgrund der groben Positionsbestimmung ausführbares Verbringen der erkannten Werkzeuge WZ in den der Meßstellung M entsprechenden Erfassungsraum 64 eine exakte Vermessung der Werkzeuge WZ bei in der Meßstellung M stehendem Arm 70" durchführen zu können.

Es ist aber auch denkbar, die Position der Meßeinrichtung 50" beim Bewegen derselben durch ein Meßsystem 198 exakt zu erfassen, um in einzelnen oder allen Positionen eine exakt definierte Meßstellung vorliegen zu haben, in welcher dann eine genaue Vermessung der Werkzeuge WZ oder des Werkstücks W durchführbar wäre.

Eine weitere Möglichkeit, die Meßeinrichtung 50" im Arbeitsraum 42 zu bewegen und deren Position exakt zu erfassen, wäre beispielsweise die, die Meßeinrichtung 50"b in die Meßstellung M relativ zum Spindelgehäuse 12b zu verfahren und dann durch mittels der Maschinensteuerung 130 gesteuertem und somit hinsichtlich des Verfahrwegs bekanntem Verfahren des Spindelgehäuses 12b die Meßeinrichtung 50"b im Arbeitsraum 42 zu bewegen, beispielsweise um ein Werkstück W in der Werkstückspindel 14a zu vermessen oder Werkzeuge WZ zu vermessen, die der Werkstückspindel 14a oder gegebenenfalls auch der Werkstückspindel 14b zugeordnet sind.

Alternativ dazu besteht auch die Möglichkeit, eine Relativbewegung zwischen der Meßeinrichtung 50" und beispielsweise einem zu vermessenden Werkstück W dadurch zu erzeugen, daß beispielsweise die Meßeinrichtung 50"a relativ zum Spindelgehäuse 14a in die Meßstellung verfahren wird und das Werkstück W in der Werkstückspindel 14b gehalten und durch mit der Maschinensteuerung 130 gesteuertem und somit hinsichtlich des Verfahrwegs bekanntem Verfahren der Werkstückspindel 14b relativ zur Meßeinrichtung 50"a bewegt wird.

Im übrigen wird hinsichtlich der Teile, die mit denen der voranstehenden Ausführungsbeispiele identisch sind und mit diesen identische Bezugszeichen aufweisen, auf die Beschreibung derselben im Zusammenhang mit den voranstehenden Ausführungsbeispielen vollinhaltlich Bezug genommen.

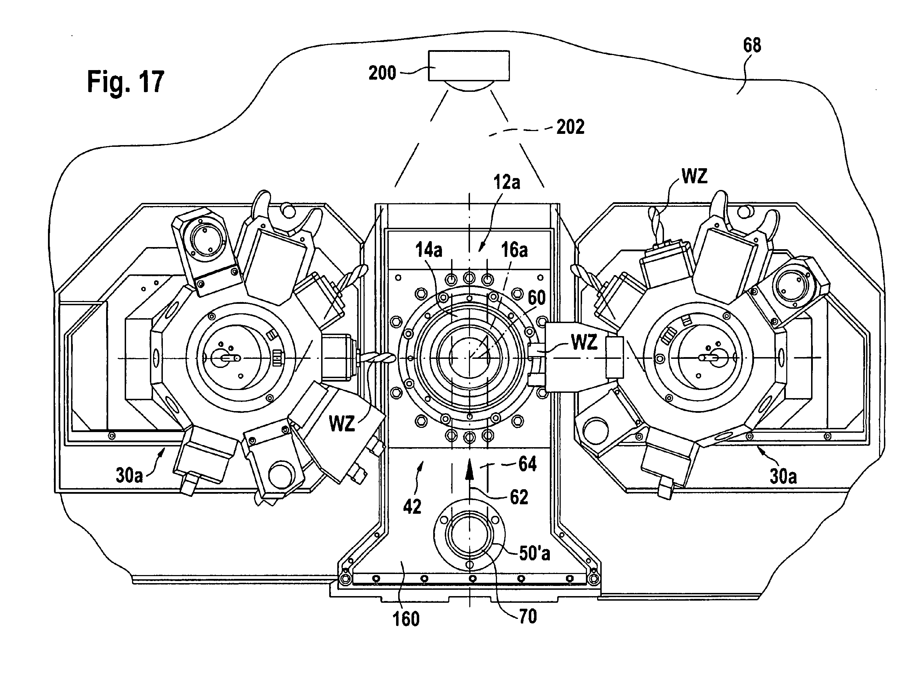

Bei einem sechsten Ausführungsbeispiel, dargestellt in Fig. 17, entspricht der Aufbau im Prinzip dem des fünften Ausführungsbeispiels.

Zusätzlich zu den Elementen des fünften Ausführungsbeispiels ist bei dem sechsten Ausführungsbeispiel an der Wand 68 des Arbeitsraums und auf einer der Meßeinrichtung 50" gegenüberliegenden Seite des Werkstücks W eine Weitwinkelkamera 200 vorgesehen, welche einen Beobachtungsbereich 202 aufweist, der so groß ist, daß innerhalb des Beobachtungsbereichs 202 sämtliche in der Arbeitsstellung stehenden Werkzeuge WZ stehen, unabhängig von der Position des diese Werkzeuge WZ tragenden Werkzeugträgers 30, so daß in jeder Stellung des Werkzeugträgers 30 die lokale Position des in Arbeitsstellung stehenden Werkzeugs WZ von der Weitwinkelkamera 200 erfaßt werden kann.

Das Bild der Weitwinkelkamera 200 wird daher ebenfalls der Bildverarbeitungseinheit 120 übermittelt und diese ist in der Lage, die grobe Position des Werkzeugs WZ im Arbeitsraum 42 zu erkennen und die Maschinensteuerung 130 derart anzusteuern, daß das Werkzeug WZ in den Erfassungsraum 64 bewegt wird, um dort mittels der Meßeinrichtung 50" vermessen werden zu können.

Ferner kann die Weitwinkelkamera 200 generell dazu eingesetzt werden, einen Bearbeitungsprozeß zu dokumentieren, wobei die Bilddaten vorzugsweise durch übliche Komprimierverfahren komprimiert und damit speicherplatzsparend speicherbar sind.

Vorzugsweise erfolgt das Anzeigen des Beginns des Bearbeitungsvorgangs und des Endes des Bearbeitungsvorgangs durch ein Startsignal und ein Stopsignal, welches von der Maschinensteuerung 130 der Bildverarbeitungseinheit 120 übermittelt wird, wobei diese dann zwischen dem Start- und dem Stopsignal den Bearbeitungsprozeß vollständig aufzeichnet und abspeichert.

Im übrigen ist das sechste Ausführungsbeispiel in gleicher Weise ausgebildet und arbeitet auch in gleicher Weise wie das fünfte Ausführungsbeispiel, so daß auf die Erläuterungen zum fünften Ausführungsbeispiel und hinsichtlich der mit den vorangehenden Ausführungsbeispielen ähnlichen Teile auf die Erläuterungen zu den vorangehenden Ausführungsbeispielen vollinhaltlich Bezug genommen werden kann.

## Patentansprüche

1. Werkzeugmaschine umfassend
ein Maschinengestell (10), einen Arbeitsraum (42), in welchem eine Bearbeitung eines Werkstücks (W) mittels eines Werkzeugs (WZ) durch Bewegung derselben relativ zueinander erfolgt, einen am Maschinengestell (10) angeordneten Werkstückträger (14) mit einer Aufnahme (18) für das Werkstück (W), einen am Maschinengestell (10) angeordneten Werkzeugträger (30) mit einer Aufnahme (34) für das Werkzeug (WZ), eine Maschinensteuerung (130) zur Durchführung der Bewegung von Werkstück (W) und Werkzeug (WZ) relativ zueinander und eine optische Messeinrichtung (50) zum Erfassen von Geometriedaten von mindestens einem im Arbeitsraum (42) angeordneten Objekt (WZ, W) in einer innerhalb eines Erfassungsraums (64) liegenden Erfassungsebene (60) relativ zu einem Maschinenbezugspunkt (BP), wobei die Messeinrichtung (50) eine elektronische Bilderfassungseinheit (90) und eine dieser zugeordnete Abbildungsoptik (74) aufweist, die ein innerhalb des Erfassungsraums (64) angeordnetes Objekt (WZ, W) auf die Bilderfassungseinheit (90) abbildet, und eine der Bilderfassungseinheit (90) zugeordnete Bildverarbeitungseinheit (120), mit welcher aufgrund von Geometriedaten des Objekts (WZ, W) und Referenzdaten (RF₁, RF₂) eine Relativposition des Objekts (WZ, W) zu dem Maschinenbezugspunkt (BP) bestimmbar ist,
**dadurch gekennzeichnet, dass** die Abbildungsoptik (74) in einem sich in der Messstellung (M) in dem Arbeitsraum (42) erstreckenden Gehäuse (72) angeordnet ist, und dass eine Positioniereinrichtung (102, 104; 180, 182) vorgesehen ist, mit welcher das Gehäuse (72) mitsamt der Abbildungsoptik (74) in der Messstellung (M) im Arbeitsraum (42) an einer Halterung (100, 170) der Werkzeugmaschine durch einen lösbaren Formschluss exakt positionierbar ist.

2. Werkzeugmaschine nach Anspruch 1, **dadurch gekennzeichnet, dass** die Erfassung der Relativposition des Objekts (WZ, W) in mindestens einer Messstellung (M) der Messeinrichtung (50) erfolgt.

3. Werkzeugmaschine nach Anspruch 2, **dadurch gekennzeichnet, dass** der Erfassungsraum (64) und die Erfassungsebene (60) in mehrere Messstellungen (M) bewegbar sind.

4. Werkzeugmaschine nach Anspruch 2 oder 3, **dadurch gekennzeichnet, dass** der Messeinrichtung (50) eine Positionserkennungseinrichtung (198) zugeordnet ist, mit welcher in der jeweiligen Messstellung (M) die Position des Erfassungsbereichs (64) der Erfassungsebene (60) und der durch die Referenzdaten (RF₁, RF₂) repräsentierten Orte relativ zum Maschinenbezugspunkt (BP) bestimmbar sind.

5. Werkzeugmaschine nach einem der voranstehenden Ansprüche, **dadurch gekennzeichnet, dass** sich das Gehäuse (72) in der Messstellung (M) ausgehend von einem den Arbeitsraum (42) begrenzenden Element (68, 168) in diesen hinein erstreckt.

6. Werkzeugmaschine nach einem der voranstehenden Ansprüche, **dadurch gekennzeichnet, dass** das Gehäuse (72') zusätzlich zu der Abbildungsoptik (74) die elektronische Bilderfassungseinheit (90) aufnimmt.

7. Werkzeugmaschine nach einem der Ansprüche 1 bis 5, **dadurch gekennzeichnet, dass** die elektronische Bilderfassungseinheit (90) in einem eigenen, von dem Gehäuse (72) der Abbildungsoptik (74) separaten Gehäuse (96) angeordnet ist.

8. Werkzeugmaschine nach Anspruch 7, **dadurch gekennzeichnet, dass** die elektronische Bilderfassungseinheit (90) von dem Gehäuse (72) der Abbildungsoptik (74) lösbar ist.

9. Werkzeugmaschine nach einem der voranstehenden Ansprüche, **dadurch gekennzeichnet, dass** das Gehäuse (72) der Abbildungsoptik (74) von der Messstellung (M) in eine Ruhestellung (R) bewegbar ist.

10. Werkzeugmaschine nach Anspruch 9, **dadurch gekennzeichnet, dass** das Gehäuse (72) der Abbildungsoptik (74) aus dem Arbeitsraum (42) heraus in die Ruhestellung (R) bewegbar ist.

11. Werkzeugmaschine nach Anspruch 9 oder 10, **dadurch gekennzeichnet, dass** das Gehäuse (72) der Abbildungsoptik (74) in der Ruhestellung (R) gegen Spänebeaufschlagung und/oder Kühlmittelbeaufschlagung geschützt ist.

12. Werkzeugmaschine nach einem der voranstehenden Ansprüche, **dadurch gekennzeichnet, dass** das Gehäuse (72") mittels eines Antriebs (190) bewegbar ist.

13. Werkzeugmaschine nach Anspruch 12, **dadurch gekennzeichnet, dass** das Gehäuse (72") durch den Antrieb (190) in den Arbeitsraum (42) hinein und aus diesem heraus bewegbar ist.

14. Werkzeugmaschine nach einem der Ansprüche 9 bis 13, **dadurch gekennzeichnet, dass** das Gehäuse (72") in Richtung quer zu einer Bewegungsachse (X) des Werkzeugs (WZ) bei der Bearbeitung des Werkstücks (W) bewegbar ist.

15. Werkzeugmaschine nach einem der voranstehenden Ansprüche, **dadurch gekennzeichnet, dass** mit der Positioniereinrichtung (102, 104; 180, 182) das Gehäuse (72) der Abbildungsoptik (74) im Arbeitsraum (42) wiederholgenau positionierbar ist.

16. Werkzeugmaschine nach einem der voranstehenden Ansprüche, **dadurch gekennzeichnet, dass** die Positioniereinrichtung (102, 104; 180, 182) das Gehäuse (72) durch Formschluss exakt positioniert.

17. Werkzeugmaschine nach einem der voranstehenden Ansprüche, **dadurch gekennzeichnet, dass** das Gehäuse (96) der Bilderfassungseinheit (90) durch die Positioniereinrichtung (102, 104) exakt relativ zum Gehäuse (72) der Abbildungsoptik (74) positionierbar ist.

18. Werkzeugmaschine nach einem der voranstehenden Ansprüche, **dadurch gekennzeichnet, dass** der Positioniereinrichtung (180, 182) eine Führung (190) für eine Bewegung des Gehäuses (72") der Abbildungsoptik (74) in den Arbeitsraum (42) hinein und aus diesem heraus zugeordnet ist.

19. Werkzeugmaschine nach einem der voranstehenden Ansprüche, **dadurch gekennzeichnet, dass** in der Messstellung (M) des Gehäuses (72) der Abbildungsoptik (74) die elektronische Bilderfassungseinheit (90) für die Abbildungsoptik (74) außerhalb des Arbeitsraums (42) angeordnet ist.

20. Werkzeugmaschine nach einem der voranstehenden Ansprüche, **dadurch gekennzeichnet, dass** die Messeinrichtung (50) eine Außenkontur (AK) des Objekts (WZ, W) erfasst.

21. Werkzeugmaschine nach einem der voranstehenden Ansprüche, **dadurch gekennzeichnet, dass** die Abbildungsoptik (74) in einer festgelegten Erfassungsebene (60) liegende geometrische Konturen (AK) des Objekts (WZ, W) auf die Bilderfassungseinheit (90) abbildet.

22. Werkzeugmaschine nach Anspruch 20 oder 21, **dadurch gekennzeichnet, dass** die Messeinrichtung (50) durch von einer der Erfassungsebene (60) gegenüberliegenden Seite kommendes diffuses Hintergrundlicht (140) sich in der Erfassungsebene (60) abzeichnende Konturen (AK) erfasst.

23. Werkzeugmaschine nach Anspruch 22, **dadurch gekennzeichnet, dass** das diffuse Hintergrundlicht (140) durch auf einer der Abbildungsoptik (74) gegenüberliegenden Seite der Erfassungsebene (60) angeordnete Strahlungsquellen erzeugt wird.

24. Werkzeugmaschine nach Anspruch 22, **dadurch gekennzeichnet, dass** das diffuse Hintergrundlicht (140) durch Reflexion von Licht erzeugt wird das von mindestens einer Strahlungsquelle (142) kommt, die auf derselben Seite der Erfassungsebene (60) angeordnet ist wie die Abbildungsoptik (74).

25. Werkzeugmaschine nach Anspruch 24, **dadurch gekennzeichnet, dass** die Strahlungsquelle (142) an dem Gehäuse (72) der Abbildungsoptik (74) angeordnet ist.

26. Werkzeugmaschine nach einem der Ansprüche 21 bis 25, **dadurch gekennzeichnet, dass** die Abbildungsoptik (74) derart ausgebildet ist, dass die Erfassung von Geometriedaten in zwei voneinander verschiedenen, nichtparallelen Erfassungsebenen (60₁, 60₂) möglich ist.

27. Werkzeugmaschine nach Anspruch 26, **dadurch gekennzeichnet, dass** die Abbildungsoptik (74) von einer Erfassungsebene (60₁) auf die andere Erfassungsebene (60₂) umschaltbar ist.

28. Werkzeugmaschine nach einem der voranstehenden Ansprüche, **dadurch gekennzeichnet, dass** die Abbildungsoptik (74) derart ausgebildet ist, dass mindestens eine Erfassungsebene (60) parallel zu mindestens einer der Bewegungsachsen (X, Y) verläuft, längs welcher eine Relativbewegung zwischen Werkstück (W) und Werkzeug (WZ) zur Bearbeitung des Werkstücks (W) erfolgt.

29. Werkzeugmaschine nach einem der voranstehenden Ansprüche, **dadurch gekennzeichnet, dass** das Werkstück (W) zumindest zur Durchführung mindestens eines Teils der Bearbeitung um eine Spindelachse (16) drehbar ist.

30. Werkzeugmaschine nach Anspruch 29, **dadurch gekennzeichnet, dass** die eine Erfassungsebene (60) parallel zur Spindelachse (16) verläuft.

31. Werkzeugmaschine nach Anspruch 29 oder 30, **dadurch gekennzeichnet, dass** eine Erfassungsebene (60) quer zur Spindelachse (16) verläuft.

32. Werkzeugmaschine nach einem der voranstehenden Ansprüche, **dadurch gekennzeichnet, dass** mit der Messeinrichtung (50) während einer Bewegung derselben im Arbeitsraum (42) Geometriedaten erfassbar sind.

33. Werkzeugmaschine nach Anspruch 32, **dadurch gekennzeichnet, dass** die Bewegung der Messeinrichtung (50) im Arbeitsraum (42) durch ein Messsystem (198) erfassbar ist.

34. Werkzeugmaschine nach Anspruch 32, **dadurch gekennzeichnet, dass** eine Erfassung der relativen Bewegung der Messeinrichtung (50) zu dem die Geometriedaten aufweisenden Objekt im Arbeitsraum (42) durch eine gesteuerte Relativbewegung einer die Messeinrichtung (50) oder das Objekt (W, WZ) tragenden Einheit (12) der Werkzeugmaschine zu dem zu erfassenden Objekt (W, WZ) bzw. der Messeinrichtung (50) erfolgt.

35. Werkzeugmaschine nach einem der voranstehenden Ansprüche, **dadurch gekennzeichnet, dass** eine den Erfassungsraum (64) durch ein Strahlenbündel (146) im sichtbaren Bereich optisch kennzeichnende Markierungslichtquelle (144) vorgesehen ist.

36. Werkzeugmaschine nach Anspruch 35, **dadurch gekennzeichnet, dass** die Markierungslichtquelle (144) an dem Gehäuse (72) der Abbildungsoptik (74) angeordnet ist.

37. Werkzeugmaschine nach einem der voranstehenden Ansprüche, **dadurch gekennzeichnet, dass** der Bildverarbeitungseinheit (120) ein das Objekt darstellender Bildschirm (126) zugeordnet ist.

38. Werkzeugmaschine nach einem der voranstehenden Ansprüche, **dadurch gekennzeichnet, dass** die Referenzdaten durch einen Referenzdatensatz (RF₁,RF₂) gebildet sind, welcher in der Bildverarbeitungseinheit (120) gespeichert ist.

39. Werkzeugmaschine nach einem der voranstehenden Ansprüche, **dadurch gekennzeichnet, dass** die Referenzdaten mindestens einer Referenzlinie (RF₁,RF₂) entsprechen.

40. Werkzeugmaschine nach Anspruch 39, **dadurch gekennzeichnet, dass** die Referenzdaten mindestens zwei sich kreuzenden Referenzlinien (RF₁,RF₂) entsprechen.

41. Werkzeugmaschine nach Anspruch 40, **dadurch gekennzeichnet, dass** die Referenzdaten ein Fadenkreuz (RF₁, RF₂) darstellen.

42. Werkzeugmaschine nach einem der voranstehenden Ansprüche, **dadurch gekennzeichnet, dass** die Bildverarbeitungseinheit (120) ein Bildverarbeitungsprogramm aufweist, welches ein Berühren von durch die Referenzdaten (RF₁, RF₂) bestimmten Orten durch den Geometriedaten des Objekts (WZ, W) entsprechenden Orten erkennt.

43. Werkzeugmaschine nach Anspruch 42, **dadurch gekennzeichnet, dass** das Bildverarbeitungsprogramm ein Berühren der durch die Referenzdaten (RF₁, RF₂) bestimmten Orte von einem Übergreifen von der durch die Referenzdaten (RF₁, RF₂) bestimmten Orte unterscheidet.

44. Werkzeugmaschine nach Anspruch 42 oder 43, **dadurch gekennzeichnet, dass** die Bildverarbeitungseinheit (120) über eine Vermessungssteuerung (132) auf die Maschinensteuerung (130) in dem Sinne einwirkt, dass das Objekt (WZ, W) in sich zunehmend verkleinerndem Abstand an die Referenzdaten (RF₁,RF₂) heranbewegbar ist.

45. Werkzeugmaschine nach einem der voranstehenden Ansprüche, **dadurch gekennzeichnet, dass** der Bildverarbeitungseinheit (120) eine Kamera (200) zugeordnet ist, in deren Beobachtungsbereich (202) in Arbeitsstellung zum Werkstück (W) ausgerichtete Werkzeuge (WZ) stehen.

46. Werkzeugmaschine nach Anspruch 45, **dadurch gekennzeichnet, dass** die Kamera (200) auf einer der Messeinrichtung (50") gegenüberliegenden Seite des in der Werkstückaufnahme (14) zur Bearbeitung vorgesehenen Werkstücks (W) angeordnet ist.

47. Werkzeugmaschine nach Anspruch 45 oder 46, **dadurch gekennzeichnet, dass** der Beobachtungsbereich (202) der Kamera (200) eine Ausdehnung aufweist, so dass alle einem zu bearbeitenden Werkstück (W) zugeordneten und in Arbeitsstellung stehenden Werkzeuge (WZ) von der Kamera erfassbar sind.

48. Werkzeugmaschine nach einem der Ansprüche 45 bis 47, **dadurch gekennzeichnet, dass** mit der Bildverarbeitungseinheit (120) und der Kamera (200) ein Bearbeitungsprozess des Werkstücks (W) aufzeichenbar ist.

## Claims

1. Machine tool comprising
a machine frame (10), a work area (42), in which a machining of a workpiece (W) is conducted by means of a tool (WZ) by movement of these relative to one another, a workpiece support (14) arranged on the machine frame (10) with a seating (18) for the workpiece (W), a tool support (30) arranged on the machine frame (10) with a seating (34) for the tool (WZ), a machine control means (130) for performing the movement of the workpiece (W) and the tool (WZ) relative to one another and an optical measuring device (50) for detecting geometric data of at least one object (WZ, W) arranged in the work area (42) in a detection plane (60) located within a detection area (64) relative to a machine reference point (BP), wherein the measuring device (50) has an electronic image acquisition unit (90) and an optical imaging unit (74) associated with this, which forms an image of an object (WZ, W) arranged within the detection area (64) on the image acquisition unit (90), and an image processing unit (120) associated with the image acquisition unit (90), with which a relative position of the object (WZ, W) to the machine reference point (BP) can be determined on the basis of geometric data of the object (WZ, W) and reference data (RF₁, RF₂),
**characterised in that** the optical imaging unit (74) is arranged in a housing (72) extending in the work area (42) in the measurement position (M), and that a positioning means (102, 104; 180, 182) is provided, with which in the measurement position (M) the housing (72) together with the optical imaging unit (74) can be positioned accurately in the work area (42) on a mounting (100, 170) of the machine tool by a releasable positive-locking arrangement.

2. Machine tool according to claim 1, **characterised in that** the detection of the relative position of the object (WZ, W) occurs in at least one measurement position (M) of the measuring device (50).

3. Machine tool according to claim 2, **characterised in that** the detection area (64) and the detection plane (60) are movable into a plurality of measurement positions (M).

4. Machine tool according to claim 2 or 3, **characterised in that** the measuring device (50) has an associated position recognition device (198), with which in the respective measurement position (M) the position of the detection area (64), the detection plane (60) and the locations represented by the reference data (RF_{1,} RF₂) can be determined relative to the machine reference point (BP).

5. Machine tool according to one of the preceding claims, **characterised in that** in the measurement position (M) the housing (72) extends from an element (68, 168) bounding the work area (42) into said work area.

6. Machine tool according to one of the preceding claims, **characterised in that** the housing (72') accommodates the electronic image acquisition unit (90) in addition to the optical imaging unit (74).

7. Machine tool according to one of claims 1 to 5, **characterised in that** the electronic image acquisition unit (90) is arranged in its own housing (96) separate from the housing (72) of the optical imaging unit (74).

8. Machine tool according to claim 7, **characterised in that** the electronic image acquisition unit (90) is detachable from the housing (72) of the optical imaging unit (74).

9. Machine tool according to one of the preceding claims, **characterised in that** the housing (72) of the optical imaging unit (74) is movable from the measurement position (M) into a rest position (R).

10. Machine tool according to claim 9, **characterised in that** the housing (72) of the optical imaging unit (74) is movable out of the work area (42) into the rest position (R).

11. Machine tool according to claim 9 or 10, **characterised in that** the housing (72) of the optical imaging unit (74) is protected in the rest position (R) from the impact of cuttings and/or exposure to coolant.

12. Machine tool according to one of the preceding claims, **characterised in that** the housing (72") is movable by means of a drive (190).

13. Machine tool according to claim 12, **characterised in that** the housing (72") is movable into and out of the work area (42) by means of the drive (190).

14. Machine tool according to one of claims 9 to 13, **characterised in that** the housing (72") is movable in a transverse direction to a movement axis (X) of the tool (WZ) during the machining of the workpiece (W).

15. Machine tool according to one of the preceding claims, **characterised in that** the housing (72) of the optical imaging unit (74) can be positioned in the work area (42) with repeating accuracy using the positioning means (102, 104; 180, 182).

16. Machine tool according to one of the preceding claims, **characterised in that** the positioning means (102, 104; 180, 182) accurately positions the housing (72) by positive-locking.

17. Machine tool according to one of the preceding claims, **characterised in that** the housing (96) of the image acquisition unit (90) can be positioned accurately relative to the housing (72) of the optical imaging unit (74) by the positioning means (102, 104).

18. Machine tool according to one of the preceding claims, **characterised in that** the positioning means (180, 182) has an associated guide means (190) for a movement of the housing (72") of the optical imaging unit (74) into and out of the work area (42).

19. Machine tool according to one of the preceding claims, **characterised in that** in the measurement position (M) of the housing (72) of the optical imaging unit (74) the electronic image acquisition unit (90) for the optical imaging unit (74) is arranged outside the work area (42).

20. Machine tool according to one of the preceding claims, **characterised in that** the measuring device (50) detects an outer contour (AK) of the object (WZ, W).

21. Machine tool according to one of the preceding claims, **characterised in that** the optical imaging unit (74) forms an image of geometric contours (AK) of the object (WZ, W) located in a defined detection plane (60) on the image acquisition unit (90).

22. Machine tool according to claim 20 or 21, **characterised in that** the measuring device (50) detects contours (AK) delineated in the detection plane (60) by diffuse background light (140) coming from a side opposite the detection plane (60).

23. Machine tool according to claim 22, **characterised in that** the diffuse background light (140) is generated by radiation sources arranged on a side of the detection plane (60) located opposite the optical imaging unit (74).

24. Machine tool according to claim 22, **characterised in that** the diffuse background light (140) is generated by the reflection of light coming from at least one radiation source (142), which is arranged on the same side of the detection plane (60) as the optical imaging unit (74).

25. Machine tool according to claim 24, **characterised in that** the radiation source (142) is arranged on the housing (72) of the optical imaging unit (74).

26. Machine tool according to one of claims 21 to 25, **characterised in that** the optical imaging unit (74) is configured such that it is possible to detect geometric data in two different, non-parallel detection planes (60₁, 60₂).

27. Machine tool according to claim 26, **characterised in that** the optical imaging unit (74) can be switched over from one detection plane (60₁) to the other detection plane (60₂).

28. Machine tool according to one of the preceding claims, **characterised in that** the optical imaging unit (74) is configured such that at least one detection plane (60) runs parallel to at least one of the movement axes (X, Y), along which a relative movement occurs between the workpiece (W) and the tool (WZ) for machining of the workpiece (W).

29. Machine tool according to one of the preceding claims, **characterised in that** the workpiece (W) is rotatable around a spindle axis (16) at least to conduct at least a part of the machining.

30. Machine tool according to claim 29, **characterised in that** the one detection plane (60) runs parallel to the spindle axis (16).

31. Machine tool according to claim 29 or 30, **characterised in that** a detection plane (60) runs transversely to the spindle axis (16).

32. Machine tool according to one of the preceding claims, **characterised in that** geometric data can be detected with the measuring device (50) during a movement thereof in the work area (42).

33. Machine tool according to claim 32, **characterised in that** the movement of the measuring device (50) in the work area (42) can be detected by a measurement system (198).

34. Machine tool according to claim 32, **characterised in that** a detection of the relative movement of the measuring device (50) to the object having the geometric data in the work area (42) is effected by means of a controlled relative movement of a unit (12) of the machine tool supporting the measuring device (50) or the object (W, WZ) to the object (W, WZ) to be detected or to the measuring device (50).

35. Machine tool according to one of the preceding claims, **characterised in that** there is provided a designating light source (144) optically identifying the detection area (64) in the visible range by means of a beam cluster (146).

36. Machine tool according to claim 35, **characterised in that** the designating light source (144) is arranged on the housing (72) of the optical imaging unit (74).

37. Machine tool according to one of the preceding claims, **characterised in that** the image processing unit (120) has an associated screen (126) displaying the object.

38. Machine tool according to one of the preceding claims, **characterised in that** the reference data are formed by a reference data set (RF₁, RF₂), which is stored in the image processing unit (120).

39. Machine tool according to one of the preceding claims, **characterised in that** the reference data correspond to at least one reference line (RF₁, RF₂).

40. Machine tool according to claim 39, **characterised in that** the reference data correspond to at least two intersecting reference lines (RF₁, RF₂).

41. Machine tool according to claim 40, **characterised in that** the reference data represent a cross-hair (RF₁, RF₂).

42. Machine tool according to one of the preceding claims, **characterised in that** the image processing unit (120) has an image processing program, which recognises a contact of locations determined by the reference data (RF₁, RF₂) by locations corresponding to the geometric data of the object (WZ, W).

43. Machine tool according to claim 42, **characterised in that** the image processing program distinguishes a contact of the locations determined by the reference data (RF₁, RF₂) from an overlap of the locations determined by the reference data (RF₁, RF₂).

44. Machine tool according to claim 42 or 43, **characterised in that** the image processing unit (120) acts on the machine control means (130) by means of a measurement control means (132) in the sense that the object (WZ, W) is movable at an ever decreasing distance towards the reference data (RF₁, RF₂).

45. Machine tool according to one of the preceding claims, **characterised in that** the image processing unit (120) has an associated camera (200), in the viewing range (202) of which are located tools (WZ) aligned with the workpiece (W) in the work position.

46. Machine tool according to claim 45, **characterised in that** the camera (200) is arranged on a side of the workpiece (W), which is provided in the workpiece seating (14) for machining, located opposite the measuring device (50").

47. Machine tool according to claim 45 or 46, **characterised in that** the viewing range (202) of the camera (200) has an extent, such that all tools (WZ) located in the work position and associated with a workpiece (W) to be machined can be captured by the camera.

48. Machine tool according to one of claims 45 to 47, **characterised in that** a machining process of the workpiece (W) can be recorded with the image processing unit (120) and the camera (200).

## Revendications

1. Machine-outil comprenant
un bâti de machine (10), un compartiment de travail (42) dans lequel est réalisé un usinage d'une pièce (W) à l'aide d'un outil (WZ) par le déplacement de ceux-ci l'un par rapport à l'autre, un porte-pièce (14) placé sur le bâti de machine (10) avec un logement (18) pour la pièce (W), un porte-outil (30) placé sur le bâti de machine (10) avec un logement (34) pour l'outil (WZ), une commande de machine (130) pour la réalisation du déplacement de la pièce (W) et de l'outil (WZ) l'un par rapport à l'autre et un dispositif de mesure optique (50) pour la détection de données géométriques d'au moins un objet (WZ, W) disposé dans le compartiment de travail (42) dans un plan de détection (60) se trouvant à l'intérieur d'une zone de détection (64) par rapport à un point de référence de machine (BP), le dispositif de mesure (50) comportant une unité de détection d'image électronique (90) et une optique de reproduction (74) associée à celle-ci qui reproduit un objet (WZ, W) disposé à l'intérieur de la zone de détection (64) sur l'unité de détection d'image (90) et une unité de traitement d'image (120) associée à l'unité de détection d'image (90) avec laquelle une position relative de l'objet (WZ, W) par rapport au point de référence de machine (BP) peut être déterminée sur la base de données géométriques de l'objet (WZ, W) et de données de référence (RF₁, RF₂),
**caractérisée en ce que** l'optique de reproduction (74) est disposée dans un boîtier (72) s'étendant dans la position de mesure (M) dans le compartiment de travail (42) et **en ce qu'**il est prévu un dispositif de positionnement (102, 104 ; 180, 182) avec lequel le boîtier (72), avec l'optique de reproduction (74), dans la position de mesure (M) dans le compartiment de travail (42), peut être positionné précisément sur un support (100, 170) de la machine-outil au moyen d'un accouplement géométrique amovible.

2. Machine-outil selon la revendication 1, **caractérisée en ce que** la détection de la position relative de l'objet (WZ, W) se fait au moins dans une position de mesure (M) du dispositif de mesure (50).

3. Machine-outil selon la revendication 2, **caractérisée en ce que** le compartiment de détection (64) et le plan de détection (60) sont déplaçables dans plusieurs positions de mesure (M).

4. Machine-outil selon la revendication 2 ou 3, **caractérisée en ce qu'**un dispositif de reconnaissance de position (198), avec lequel, dans la position de mesure respective (M), la position de la zone de détection (64) du plan de détection (60) et des emplacements représentés par les données de référence (RF₁, RF₂) par rapport au point de référence de machine (BP) peut être déterminée, est associé au dispositif de mesure (50).

5. Machine-outil selon l'une quelconque des revendications précédentes, **caractérisée en ce que**, dans la position de mesure (M), le boîtier (72) part d'un élément (68, 168) délimitant le compartiment de travail (42) et s'étend à l'intérieur de ce dernier.

6. Machine-outil selon l'une quelconque des revendications précédentes, **caractérisée en ce que** le boîtier (72') reçoit, en plus de l'optique de reproduction (74), l'unité de détection d'image électronique (90).

7. Machine-outil selon l'une quelconque des revendications 1 à 5, **caractérisée en ce que** l'unité de détection d'image électronique (90) est disposée dans un boîtier (96) propre séparé du boîtier (72) de l'optique de reproduction (74).

8. Machine-outil selon la revendication 7, **caractérisée en ce que** l'unité de détection d'image électronique (90) est détachable du boîtier (72) de l'optique de reproduction (74).

9. Machine-outil selon l'une quelconque des revendications précédentes, **caractérisée en ce que** le boîtier (72) de l'optique de reproduction (74) est déplaçable entre la position de mesure (M) et une position de repos (R).

10. Machine-outil selon la revendication 9, **caractérisée en ce que** le boîtier (72) de l'optique de reproduction (74) est déplaçable hors du compartiment de travail (42) dans la position de repos (R).

11. Machine-outil selon la revendication 9 ou 10, **caractérisée en ce que** le boîtier (72) de l'optique de reproduction (74) dans la position de repos (R) est protégé contre la projection de copeaux et/ou la projection d'agent réfrigérant.

12. Machine-outil selon l'une quelconque des revendications précédentes, **caractérisée en ce que** le boîtier (72") est déplaçable à l'aide d'un entraînement (190).

13. Machine-outil selon la revendication 12, **caractérisée en ce que** le boîtier (72") est déplaçable dans le compartiment de travail (42) et hors de celui-ci à l'aide de l'entraînement (190).

14. Machine-outil selon l'une quelconque des revendications 9 à 13, **caractérisée en ce que** le boîtier (72") est déplaçable dans la direction perpendiculaire à un axe de déplacement (X) de l'outil (WZ) lors de l'usinage de la pièce (W).

15. Machine-outil selon l'une quelconque des revendications précédentes, **caractérisée en ce que** le boîtier (72) de l'optique de reproduction (74) peut être positionné de manière reproductible dans le compartiment de travail (42) avec le dispositif de positionnement (102, 104 ; 180, 182).

16. Machine-outil selon l'une quelconque des revendications précédentes, **caractérisée en ce que** le dispositif de positionnement (102, 104 ; 180, 182) positionne précisément le boîtier (72) par accouplement géométrique.

17. Machine-outil selon l'une quelconque des revendications précédentes, **caractérisée en ce que** le boîtier (96) de l'unité de détection d'image (90) peut être positionné précisément par rapport au boîtier (72) de l'optique de reproduction (74) par le dispositif de positionnement (102, 104).

18. Machine-outil selon l'une quelconque des revendications précédentes, **caractérisée en ce qu'**une glissière (190) pour un déplacement du boîtier (72") de l'optique de reproduction (74) dans le compartiment de travail (42) et hors de celui-ci est associée au dispositif de positionnement (180, 182).

19. Machine-outil selon l'une quelconque des revendications précédentes, **caractérisée en ce que,** dans la position de mesure (M) du boîtier (72) de l'optique de reproduction (74), l'unité de détection d'image électronique (90) pour l'optique de reproduction (74) est disposée à l'extérieur du compartiment de travail (42).

20. Machine-outil selon l'une quelconque des revendications précédentes, **caractérisée en ce que** le dispositif de mesure (50) détecte un contour externe (AK) de l'objet (WZ, W).

21. Machine-outil selon l'une quelconque des revendications précédentes, **caractérisée en ce que** l'optique de reproduction (74) reproduit sur l'unité de détection d'image électronique (90) des contours géométriques (AK) de l'objet (WZ, W) se trouvant dans un plan de détection déterminé (60).

22. Machine-outil selon la revendication 20 ou 21, **caractérisée en ce que** le dispositif de mesure (50) détecte des contours (AK) dessinés dans le plan de détection (60) par une lumière d'arrière-plan diffuse (140) provenant d'un côté opposé au plan de détection (60).

23. Machine-outil selon la revendication 22, **caractérisée en ce que** la lumière d'arrière-plan diffuse (140) est générée par des sources de rayonnement disposées sur un côté du plan de détection (60) opposé à l'optique de reproduction (74).

24. Machine-outil selon la revendication 22, **caractérisée en ce que** la lumière d'arrière-plan diffuse (140) est générée par la réflexion d'une lumière qui provient d'au moins une source de rayonnement (142) qui est disposée sur le même côté du plan de détection (60) que l'optique de reproduction (74).

25. Machine-outil selon la revendication 24, **caractérisée en ce que** la source de rayonnement (142) est disposée sur le boîtier (72) de l'optique de reproduction (74).

26. Machine-outil selon l'une quelconque des revendications 21 à 25, **caractérisée en ce que** l'optique de reproduction (74) est réalisée de manière à permettre la détection de données géométriques dans deux plans de détection (60₁, 60₂) non parallèles différents l'un de l'autre.

27. Machine-outil selon la revendication 26, **caractérisée en ce que** l'optique de reproduction (74) peut être commutée entre un plan de détection (60₁) et l'autre plan de détection (60₂).

28. Machine-outil selon l'une quelconque des revendications précédentes, **caractérisée en ce que** l'optique de reproduction (74) est réalisée de telle manière qu'au moins un plan de détection (60) s'étend parallèlement à au moins l'un des axes de déplacement (X, Y) le long duquel s'effectue un déplacement relatif entre la pièce (W) et l'outil (WZ) pour l'usinage de la pièce (W).

29. Machine-outil selon l'une quelconque des revendications précédentes, **caractérisée en ce que** la pièce (W) peut tourner autour d'un axe de broche (16) au moins pour la réalisation d'au moins une partie de l'usinage.

30. Machine-outil selon la revendication 29, **caractérisée en ce que** le plan de détection (60) s'étend parallèlement à l'axe de broche (16).

31. Machine-outil selon la revendication 29 ou 30, **caractérisée en ce qu'**un plan de détection (60) s'étend perpendiculairement à l'axe de broche (16).

32. Machine-outil selon l'une quelconque des revendications précédentes, **caractérisée en ce que** des données géométriques peuvent être détectées avec le dispositif de mesure (50) pendant un déplacement de celui-ci dans le compartiment de travail (42).

33. Machine-outil selon la revendication 32, **caractérisée en ce que** le déplacement du dispositif de mesure (50) dans le compartiment de travail (42) peut être détecté par un système de mesure (198).

34. Machine-outil selon la revendication 32, **caractérisée en ce qu'**une détection du déplacement relatif du dispositif de mesure (50) par rapport à l'objet présentant les données géométriques dans le compartiment de travail (42) se fait au moyen d'un déplacement relatif commandé d'une unité (12) de la machine-outil portant le dispositif de mesure (50) ou l'objet (W, WZ) par rapport à l'objet à détecter (W, WZ) ou au dispositif de mesure (50).

35. Machine-outil selon l'une quelconque des revendications précédentes, **caractérisée en ce qu'**il est prévu une source de lumière de marquage (144) pour le marquage optique de la zone de détection (64) au moyen d'un faisceau lumineux (146) dans la zone visible.

36. Machine-outil selon la revendication 35, **caractérisée en ce que** la source de lumière de marquage (144) est disposée sur le boîtier (72) de l'optique de reproduction (74).

37. Machine-outil selon l'une quelconque des revendications précédentes, **caractérisée en ce qu'**un écran (126) représentant l'objet est associé à l'unité de traitement d'image (120).

38. Machine-outil selon l'une quelconque des revendications précédentes, **caractérisée en ce que** les données de référence sont constituées par un ensemble de données de référence (RF₁, RF₂) qui est mémorisé dans l'unité de traitement d'image (120).

39. Machine-outil selon l'une quelconque des revendications précédentes, **caractérisée en ce que** les données de référence correspondent au moins à une ligne de référence (RF₁, RF₂).

40. Machine-outil selon la revendication 39, **caractérisée en ce que** les données de référence correspondent au moins à deux lignes de référence (RF₁, RF₂) qui se croisent.

41. Machine-outil selon la revendication 40, **caractérisée en ce que** les données de référence représentent un réticule (RF₁, RF₂).

42. Machine-outil selon l'une quelconque des revendications précédentes, **caractérisée en ce que** l'unité de traitement d'image (120) comporte un programme de traitement d'image qui reconnaît un contact des emplacements déterminés par les données de référence (RF₁, RF₂) par les emplacements correspondants aux données géométriques de l'objet (WZ, W).

43. Machine-outil selon la revendication 42, **caractérisée en ce que** le programme de traitement d'image fait la distinction entre un contact des emplacements déterminés par les données de référence (RF₁, RF₂) et un chevauchement des emplacements déterminés par les données de référence (RF₁, RF₂).

44. Machine-outil selon la revendication 42 ou 43, **caractérisée en ce que** l'unité de traitement d'image (120) agit sur la commande de machine (130) par le biais d'une commande de mesurage (132) afin que l'objet (WZ, W) puisse être rapproché des données de référence (RF₁, RF₂) à une distance qui diminue progressivement.

45. Machine-outil selon l'une quelconque des revendications précédentes, **caractérisée en ce qu'**une caméra (200), dans la zone de visée (202) de laquelle des outils (WZ) sont alignés sur la pièce (W) dans la position de travail, est associée à l'unité de traitement d'image (120).

46. Machine-outil selon la revendication 45, **caractérisée en ce que** la caméra (200) est disposée sur un côté de la pièce (W) prévue pour l'usinage dans le porte-pièce (14) opposé au dispositif de mesure (50").

47. Machine-outil selon la revendication 45 ou 46, **caractérisée en ce que** la zone de visée (202) de la caméra (200) présente une extension, de sorte que tous les outils (WZ) associés à une pièce à usiner (W) et placés dans la position de travail peuvent être détectés par la caméra.

48. Machine-outil selon l'une quelconque des revendications 45 à 47, **caractérisée en ce qu'**une opération d'usinage de la pièce (W) peut être enregistrée avec l'unité de traitement d'image (120) et la caméra (200).
